(19) **Europäisches Patentamt / European Patent Office / Office européen des brevets**

(11) **EP 4 757 102 A1**

(12) **EUROPEAN PATENT APPLICATION**
published in accordance with Art. 153(4) EPC

(43) Date of publication:
**10.06.2026 Bulletin 2026/24**

(21) Application number: **24853721.9**

(22) Date of filing: **09.08.2024**

(51) International Patent Classification (IPC):
*H02J 3/38* (2026.01)

(52) Cooperative Patent Classification (CPC):
**H02J 3/32; H02J 3/38; H02J 3/46; H02J 7/00;
H02J 7/35; H02M 5/10; H02M 5/293;** Y02E 70/30

(86) International application number:
**PCT/CN2024/111267**

(87) International publication number:
**WO 2025/036312 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311016296**

(71) Applicants:
• **Contemporary Amperex Future Energy Research
  Institute (Shanghai) Limited
  Shanghai 200241 (CN)**
• **Contemporary Amperex Technology Co., Limited
  Ningde, Fujian 352100 (CN)**

(72) Inventors:
• **YU, Dongxu**
  **Shanghai 200241 (CN)**
• **YUAN, Xiaotian**
  **Shanghai 200241 (CN)**
• **LIN, Hongfei**
  **Shanghai 200241 (CN)**
• **TU, Qing**
  **Shanghai 200241 (CN)**
• **LIANG, Liliuyuan**
  **Shanghai 200241 (CN)**
• **PENG, Hao**
  **Shanghai 200241 (CN)**
• **LU, Yanhua**
  **Shanghai 200241 (CN)**
• **XU, Xiangxiang**
  **Shanghai 200241 (CN)**

(74) Representative: **Gong, Jinping**
  **CocreateIP
  Neumarkter Straße 21
  81673 München (DE)**

(54) **POWER GENERATING UNIT SYSTEM AND CONTROL METHOD THEREFOR, ELECTRONIC
DEVICE, AND STORAGE MEDIUM**

(57)      A power generation unit system (10) and a control method thereof, an electronic device, and a storage medium are provided. The power generation unit system (10) includes a new energy station (100), an energy storage power station (200), and a voltage coupling device (300). The new energy station (100) is connected to a first side (301) of the voltage coupling device (300), the energy storage power station (200) is connected to a second side (302) of the voltage coupling device (300), and a third side (303) of the voltage coupling device (300) is connected to an alternating-current bus. A zero-carbon power generation unit is achieved, with simple topology form and high applicability.

FIG. 1

EP 4 757 102 A1

## Description

## CROSS-REFERENCE

The present application claims priority to Chinese Patent Application No. 202311016296.1, filed on August 11, 2023 and entitled "POWER GENERATING UNIT SYSTEM, CONTROL METHOD THEREOF, ELECTRONIC DEVICE, AND STORAGE MEDIUM," which is incorporated herein by reference in its entirety.

## TECHNICAL FIELD

The present application relates to the field of energy storage technologies, and in particular, to a power generation unit system, a control method of power generation unit system, an electronic device, a computer-readable storage medium, and a computer program product.

## BACKGROUND

To achieve sustainable and high-quality development of renewable energy, building a new energy system is imminent, and large-scale development of new energy sources such as wind energy and photovoltaic energy (hereinafter referred to as wind and solar power) is an inevitable trend. However, due to the randomness and intermittency of new energy generation, and with the rapid growth of installed capacity of new energy, the integration capacity of the power system itself is insufficient, leading to frequent phenomena such as "wind curtailment" (abandoning wind power) and "solar curtailment" (abandoning solar power), and the power system exhibits a "dual-high" trend, affecting stability of the grid and the large-scale integration of new energy. Therefore, improving the versatility and applicability of new energy sources like wind and solar power has become an urgent problem to be solved.

## SUMMARY OF THE INVENTION

In view of this, it is necessary to address the above technical problems by providing a versatile and highly applicable power generation unit system, a control method of power generation unit system, an electronic device, a computer-readable storage medium, and a computer program product.

According to a first aspect, the present application provides a power generation unit system, where the power generation unit system includes a new energy station, an energy storage power station, and a voltage coupling device; where

the new energy station is connected to a first side of the voltage coupling device, the energy storage power station is connected to a second side of the voltage coupling device, and a third side of the voltage coupling device is connected to an alternating-current bus;

the new energy station is configured to convert new energy into electric energy and output the electric energy;

the energy storage power station is configured to store electric energy and output the electric energy externally when enabled; and

the voltage coupling device is configured to store at least a portion of the electric energy output by the new energy station in the energy storage power station, and is configured to transmit at least a portion of the electric energy output by the new energy station and/or the electric energy output by the energy storage power station when enabled to the alternating-current bus.

Based on the power generation unit system provided in this embodiment of the present application, the new energy station is connected to the first side of the voltage coupling device, the energy storage power station is connected to the second side of the voltage coupling device, and the third side of the voltage coupling device is connected to the alternating-current bus. The voltage coupling device can store at least a portion of the electric energy output by the new energy station in the energy storage power station, and can transmit at least a portion of the electric energy output by the new energy station and/or the electric energy output by the energy storage power station when enabled to the alternating-current bus. In this way, the new energy station, the energy storage power station, and the voltage coupling device of the power generation unit system together form a power generation unit system. Since the power generation unit includes a new energy station, a new energy power generation unit for new energy generation is realized. Without considering the carbon emissions during the operation of the equipment itself, there is usually no additional carbon emission during the new energy generation process, thereby achieving a zero-carbon level power generation unit. It has a simple topology form, strong versatility, and high applicability, which is conducive to realizing intelligent expansion.

In some embodiments, the voltage coupling device couples the new energy electric energy from the new energy station received on the first side and/or the electric energy provided by the energy storage power station received on the second side, and transmits the coupled energy to the alternating-current bus through the third side.

Thus, the new energy electric energy generated by the new energy station and the electric energy provided by the energy storage power station can both be supplied to the voltage coupling device. The voltage coupling device can couple the new energy electric energy and the electric energy from the energy storage power station and transmit the coupled energy to the alternating-current bus, thereby improving the external power supply capacity of the power generation unit.

In some embodiments, the voltage coupling device also couples the new energy electric energy from the new energy station received on the first side and stores it in the energy storage power station.

The new energy electric energy generated by the new energy station can also be coupled by the voltage coupling device for storage in the energy storage power station, thereby enabling the storage of the new energy electric energy generated by the new energy station, and further improving the power supply capacity of the power generation unit system.

In some embodiments, the new energy station has an output terminal configured to output first electric energy;

the energy storage power station has a charge-discharge interface configured to receive and store surplus electric energy from the new energy station; and
the voltage coupling device is connected between the output terminal of the new energy station and the charge-discharge interface of the energy storage power station, and the voltage coupling device is configured to, when the first electric energy is greater than target electric energy, output the target electric energy from the first electric energy to the alternating-current bus and store a portion of the first electric energy excluding the target electric energy as the surplus electric energy; when the first electric energy is equal to the target electric energy, output the target electric energy from the first electric energy to the alternating-current bus; and when the first electric energy is less than the target electric energy, enable the energy storage power station to output second electric energy, generate the target electric energy based on the first electric energy and the second electric energy, and output the target electric energy to the alternating-current bus.

Based on this embodiment, when the first electric energy provided by the new energy station is equal to the target electric energy, the target electric energy from the first electric energy, that is, the first electric energy, can be directly output to the alternating-current bus to meet the power supply demand of the target electric energy. When the first electric energy is greater than the target electric energy, while outputting the target electric energy from the first electric energy to the alternating-current bus to meet the power supply demand of the target electric energy, a portion of the first electric energy excluding the target electric energy is stored as the surplus electric energy to achieve storage of excess electric energy. When the first electric energy is less than the target electric energy, the energy storage power station is enabled to output the second electric energy to generate the target electric energy based on the first electric energy and the second electric energy and output the target electric energy to the alternating-current bus to meet the power supply demand of the target electric energy.

In some embodiments, the new energy station has an output terminal configured to output first electric energy;

the energy storage power station has a charge-discharge interface configured to receive and store electric energy output from the new energy station; the voltage coupling device is connected between the output terminal of the new energy station and the charge-discharge interface of the energy storage power station; and
the voltage coupling device is configured to, when an SOC of the energy storage power station is greater than or equal to a preset SOC, enable the energy storage power station to output second electric energy, generate target electric energy based on the second electric energy, and output the target electric energy to the alternating-current bus; and when the SOC of the energy storage power station is less than the preset SOC, boost the target electric energy from the first electric energy and output it to the alternating-current bus.

Based on this embodiment, when the SOC of the energy storage power station is greater than or equal to the preset SOC, that is, when the electric energy stored in the energy storage power station is sufficient, the energy storage power station outputs the second electric energy to generate the target electric energy based on the second electric energy to meet the power supply demand of the target electric energy. Power supply through the energy storage power station can enhance the stability of power supply. When the SOC of the energy storage power station is less than the preset SOC, that is, when the electric energy stored in the energy storage power station is insufficient, the target electric energy from the first electric energy output by the new energy station is boosted and output to the alternating-current bus to meet the power supply demand of the target electric energy.

In some embodiments, the voltage coupling device is further configured to, when the SOC of the energy storage power station is less than the preset SOC and the first electric energy is greater than the target electric energy, store a portion of the first electric energy excluding the target electric energy in the energy storage power station.

Based on this embodiment, when the electric energy stored in the energy storage power station is insufficient, if the output of the new energy station is greater than the target electric energy, a portion of the first electric energy excluding the target electric energy can be further stored in the energy storage power station, thereby enabling the storage of surplus electric energy.

In some embodiments, the system further includes a detection device and a control device; where

the detection device is configured to detect a station state of the new energy station and an energy storage state of the energy storage power station; and the control device is configured to receive a scheduling instruction, and based on the scheduling instruction and the station state and the energy storage state detected by the detection module, control operating states of the new energy station, the energy storage device, and the power coupling device.

Based on this embodiment, the detection device can detect the station state of the new energy station and the energy storage state of the energy storage power station. When the power generation unit system needs to participate in scheduling, the control device, based on the received scheduling instruction and the station state and energy storage state detected by the detection module, controls the operating state of the new energy station, the energy storage device, and the power coupling device, thereby meeting the demands of power scheduling.

In some embodiments, the voltage coupling device includes a three-winding transformer.

Through the three-winding transformer, internal components such as the new energy station and the energy storage power station of the power generation unit system can be coupled via the three-winding transformer to collectively form a power generation unit, which externally presents as a power generation unit with a simple topology form, high applicability, and ease of implementation.

In some embodiments, the first side is a medium-voltage side or a low-voltage side, the second side is a medium-voltage side or a low-voltage side, and the third side is a high-voltage side.

Thus, for new energy stations and energy storage power stations of different voltage levels, a power generation unit can be realized to perform power generation.

In some embodiments, the first side is a high-voltage side, the second side is a high-voltage side, and the third side is a medium-voltage side.

Thus, medium-voltage level power supply can be provided accordingly, meeting the needs of small-capacity power scenarios.

In some embodiments, the new energy station includes a plurality of new energy stations, and output terminals of the plurality of new energy stations are all connected to the voltage coupling device.

Thus, by configuring the plurality of new energy stations, the number of new energy stations can be customized based on system requirements, allowing for different capacity configurations to meet the design needs of various power generation unit systems.

In some embodiments, the power generation unit system further includes a busbar transformer, the busbar transformer being connected between the output terminal of the new energy station and the voltage coupling device.

Thus, under a condition that a plurality of new energy stations are configured, each new energy station is connected to the voltage coupling device through the busbar transformer, achieving confluence of new energy electric energy from the plurality of new energy stations.

In some embodiments, a difference between a capacity of the energy storage power station and an actual output of the new energy station is within a preset range.

Thus, the difference between the capacity of the energy storage power station and the actual output of the new energy station being within the preset range indicates that the configured capacity of the energy storage power station matches the actual output of the new energy station. The energy storage capacity of the energy storage power station can meet the storage demand of the actual output of the new energy station without causing significant waste of storage capacity. This can improve the integration capacity of new energy electric energy generated by the new energy station, achieving an intelligent and scalable low-carbon pathway.

In some embodiments, when the power generation unit system participates in primary frequency regulation, the energy storage power station controls an operating state of the energy storage power station based on a grid frequency variation.

Thus, when the power generation unit system needs to participate in primary frequency regulation, controlling the operating state of the energy storage power station in combination with the grid frequency variation can mitigate grid frequency fluctuations and enhance grid performance.

In some embodiments, when the power generation unit system participates in primary frequency regulation, the energy storage power station further sends a charge-discharge state signal to the new energy station; and

the new energy station further acquires the charge-discharge state signal of the energy storage power station and controls an operating state of the new energy station based on the charge-discharge state signal and the grid frequency variation.

Thus, by providing the charge-discharge state of the energy storage power station to the new energy station through the charge-discharge state signal, the charge-discharge state of the energy storage power station can be combined with the grid frequency variation to control the operating state of the new energy station. This enables coordination between the energy storage power station and the new energy station. Moreover, the operating state of the new energy station matches the charge-discharge state of the energy storage power station, which helps maintain the performance of the new energy station and can improve the integration capacity of new energy electric energy generated by the new energy station.

In some embodiments, the energy storage power station includes an energy storage valve and a converter valve that are connected.

Thus, by configuring an energy storage power station including an energy storage valve and a converter valve, energy storage and power supply applications are achieved through the cooperation of the energy storage valve and the converter valve.

In some embodiments, the energy storage power station includes an alternating-current direct-connected energy storage valve.

Thus, by implementing the energy storage power station with an alternating-current direct-connected energy storage valve, the safety and compatibility of the energy storage power station can be improved.

According to a second aspect, the present application provides a control method of power generation unit system, where the power generation unit system includes a new energy station and an energy storage power station, the new energy station and the energy storage power station being connected to an alternating-current bus through a voltage coupling device, and the method includes:

> receiving a scheduling instruction and determining, based on the scheduling instruction, whether the power generation unit system participates in primary frequency regulation;
> acquiring a grid frequency measurement value when it is determined that the power generation unit system participates in primary frequency regulation; and
> controlling an operating state of the new energy station and/or the energy storage power station based on the grid frequency measurement value.

Based on the method provided in the embodiments of the present application, the power generation unit system includes a new energy station and an energy storage power station, the new energy station and the energy storage power station being connected to an alternating-current bus through a voltage coupling device. In this way, internal components such as the new energy station and the energy storage power station of the power generation unit system can be coupled through the voltage coupling device to collectively form a power generation unit, externally presenting as a power generation unit. Since the power generation unit includes a new energy station, a new energy power generation unit for new energy generation is realized. Without considering the carbon emissions during the operation of the equipment itself, there is usually no additional carbon emission during the new energy generation process, thereby achieving a zero-carbon level power generation unit. During the control process, the grid can schedule the power generation unit system, and after receiving the scheduling instruction, it determines based on the scheduling instruction whether the power generation unit system needs to participate in primary frequency regulation. When the power generation unit system needs to participate in primary frequency regulation, the operating state of the new energy station and/or the energy storage power station is controlled in combination with the grid frequency measurement value, thereby enabling grid scheduling, meeting the demands of grid frequency measurement value, and achieving a scheduling process matching the grid state.

In some embodiments, the controlling an operating state of the new energy station and/or the energy storage power station based on the grid frequency measurement value includes:

> determining a grid frequency variation based on the grid frequency measurement value; and
> controlling the operating state of the new energy station and/or the energy storage power station based on the grid frequency variation.

Thus, after the grid frequency measurement value is obtained, the grid frequency variation is determined based on the grid frequency measurement value, and the operating state of the new energy station and/or the energy storage power station is controlled based on the grid frequency variation, thereby matching the variation in grid frequency and achieving a scheduling process matching the grid state.

In some embodiments, the controlling the operating state of the new energy station and/or the energy storage power station based on the grid frequency variation includes:

> acquiring an SOC state of the energy storage power station; and
> controlling the operating state of the new energy station and/or the energy storage power station based on the grid frequency variation and the SOC state of the energy storage power station.

Thus, by combining the charge-discharge state of the energy storage power station with the grid frequency variation to control the operating state of the new energy station and/or the energy storage power station, coordination between the energy storage power station and the new energy station can be achieved. The operating state of the new energy station matches the charge-discharge state of the energy storage power station, which helps maintain the performance of the new energy station and can improve the integration capacity of new energy electric energy generated by the new energy station.

In some embodiments, the controlling the operating state of the new energy station and/or the energy storage power station based on the grid frequency variation and the SOC state of the energy storage power station includes:
when the grid frequency variation is less than a first deadband value and the charge-discharge state indicates that the SOC of the energy storage power station is less than a minimum operating set value, if the new energy station is in a load reduction operating mode, increasing a power of the new energy station; if the new energy station is not in the load reduction operating mode, controlling the new energy station to be in a maximum power point tracking mode.

Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is less than the minimum operating set value, it indicates that the energy storage of the energy storage power station is not sufficient. In this case, if the new energy station is in the load reduction operating mode, it indicates that the new energy station still has a margin for power increase. Therefore, by increasing the power of the new energy unit, the overall power of the power generation unit system is increased to meet system requirements. If the new energy station is not in the load reduction operating mode, the new energy station can be controlled to be in the maximum power point tracking mode to capture new energy resources to the greatest extent, so as to increase the overall power of the power generation unit system.

In some embodiments, the controlling the operating state of the new energy station and/or the energy storage power station based on the grid frequency variation and the SOC state of the energy storage power station includes:

when the grid frequency variation is less than a first deadband value and the charge-discharge state of the energy storage power station indicates that the SOC of the energy storage power station is less than a minimum operating set value, if the new energy station is in a load reduction operating mode, controlling the energy storage power station to enter a charging mode; if the new energy station is not in the load reduction operating mode, controlling the energy storage power station to stop outputting power.

Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is less than the minimum operating set value, it indicates that the energy storage of the energy storage power station is not sufficient. If the new energy station is in the load reduction operating mode, it indicates that the new energy station still has a margin for power increase, so the new energy station can simultaneously charge the energy storage power station. Therefore, the energy storage power station is controlled to enter the charging mode. If the new energy station is not in the load reduction operating mode, it indicates that the power increase margin of the new energy station is not sufficient, so the energy storage power station is controlled to stop outputting power to maintain the energy storage performance of the energy storage power station.

In some embodiments, the controlling the operating state of the new energy station and/or the energy storage power station based on the grid frequency variation and the SOC state of the energy storage power station includes:

when the grid frequency variation is less than a first deadband value and the charge-discharge state indicates that the SOC of the energy storage power station is normal or greater than a maximum operating set value, controlling the new energy station to be in a maximum power point tracking mode.

Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is normal or greater than the maximum operating set value, it indicates that the energy storage of the energy storage power station is relatively sufficient, so the new energy station is controlled to be in the maximum power point tracking mode to capture new energy resources to the greatest extent, so as to increase the overall power of the power generation unit system.

In some embodiments, the controlling the operating state of the new energy station and/or the energy storage power station based on the grid frequency variation and the SOC state of the energy storage power station includes:

when the grid frequency variation is less than a first deadband value and the charge-discharge state indicates that the SOC of the energy storage power station is normal or greater than a maximum operating set value, controlling the energy storage power station to perform an inertia and frequency regulation process for power output.

Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is normal or greater than the maximum operating set value, it indicates that the energy storage of the energy storage power station is relatively sufficient, so the energy storage power station performs the inertia and frequency regulation process for power output to meet power scheduling demands.

In some embodiments, the controlling the operating state of the new energy station and/or the energy storage power station based on the grid frequency variation and the SOC state of the energy storage power station includes:

when the grid frequency variation is greater than a second deadband value and the charge-discharge state indicates that the SOC of the energy storage power station is normal or less than a minimum operating set value, controlling the new energy station to be in a maximum power point tracking mode.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the SOC of the energy storage power station is normal or less than the minimum operating set value, it indicates that the energy storage of the energy storage power station is insufficient, so the new energy station is controlled to be in the maximum power point tracking mode to capture new energy resources to the greatest extent, so as to decrease the overall power of the power generation unit system.

In some embodiments, the controlling the operating state of the new energy station and/or the energy storage power station based on the grid frequency variation and the SOC state of the energy storage power station includes:

when the grid frequency variation is greater than a second deadband value and the charge-discharge state indicates that the SOC of the energy storage power station is normal or less than a minimum operating set value, controlling the energy storage power station to perform an inertia and frequency regulation process for power absorption.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the SOC of the energy storage power station is normal or less than the minimum operating set value, it indicates that the energy storage power station still has storage space, so the energy storage power station is controlled to perform the inertia and frequency regulation process for power absorption to meet power scheduling demands.

In some embodiments, the controlling the operating state of the new energy station and/or the energy storage power station based on the grid frequency variation and the SOC state of the energy storage power station includes:

when the grid frequency variation is greater than a second deadband value and the charge-discharge state indicates that the SOC of the energy storage power station is greater than a maximum operating set value, controlling the new energy station to enter a load reduction operating mode.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the SOC of the energy storage power station is greater than the maximum operating set value, it indicates that the energy storage of the energy storage power station is sufficient, so the new energy station is controlled to enter the load reduction operating mode to decrease the overall power of the power generation unit system.

In some embodiments, the controlling the operating state of the new energy station and/or the energy storage power station based on the grid frequency variation and the SOC state of the energy storage power station includes:

when the grid frequency variation is greater than a second deadband value and the charge-discharge state indicates that the SOC of the energy storage power station is greater than a maximum operating set value, controlling the energy storage power station to stop outputting power.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the state of charge of the energy storage power station is greater than the maximum operating set value, it indicates that the energy storage of the energy storage power station is sufficient, so the energy storage power station is controlled to stop outputting power to decrease the overall power of the power generation unit system.

In some embodiments, the controlling the energy storage power station to stop outputting power includes:

controlling an energy storage valve of the energy storage power station to exit operation.

According to a third aspect, the present application provides a control apparatus of power generation unit system, where the power generation unit system includes a new energy station and an energy storage power station, the new energy station and the energy storage power station being connected to an alternating-current bus through a voltage coupling device; and the apparatus includes:

a scheduling instruction determination module configured to acquire a scheduling instruction and determine, based on the scheduling instruction, whether the power generation unit system participates in primary frequency regulation;
a measurement value acquisition module configured to acquire a grid frequency measurement value when it is determined that the power generation unit system participates in primary frequency regulation; and

a control module configured to control an operating state of the new energy station and/or the energy storage power station based on the grid frequency measurement value.

According to a fourth aspect, the present application provides an electronic device including a memory and a processor, where the memory has a computer program stored, and the processor, when executing the computer program, implements the steps of the method in any one of the embodiments described above.

According to a fifth aspect, the present application provides a computer-readable storage medium having a computer program stored thereon, where the computer program, when executed by a processor, implements the steps of the method in any one of the embodiments described above.

According to a sixth aspect, the present application provides a computer-readable storage medium having a computer program stored thereon, where the computer program, when executed by a processor, implements the steps of the method in any one of the embodiments described above.

The above description is merely an overview of the technical solutions of the present application. To enable a clearer understanding of the technical means of the present application and to implement them in accordance with the content of the specification, and to make the above and other objectives, features, and advantages of the present application more apparent and understandable, specific embodiments of the present application are provided below.

**DESCRIPTION OF THE DRAWINGS**

Various other advantages and benefits will become apparent to those of ordinary skill in the art upon reading the detailed description of the preferred embodiments below. The accompanying drawings are provided for the purpose of illustrating the preferred embodiments only and are not to be considered as limiting the present application. Moreover, the same reference signs are used to denote the same components throughout the drawings. In the drawings:

FIG. 1 is a schematic diagram of a topology structure of a power generation unit system according to some embodiments of the present application;

FIG. 2 is a schematic diagram of a topology structure of a power generation unit system according to some other embodiments of the present application;

FIG. 3 is a schematic diagram of a topology structure of an energy storage power station according to some embodiments of the present application;

FIG. 4 is a schematic diagram of a topology structure of a direct-current direct-connected energy storage valve according to some embodiments of the present application;

FIG. 5 is a schematic diagram of a topology structure of a converter valve connected to the grid in an energy storage power station according to some embodiments of the present application;

FIG. 6 is a schematic diagram illustrating the principle of active/reactive power output control by a converter valve according to some embodiments of the present application;

FIG. 7 is a schematic diagram illustrating the logical principle of active/reactive power output control by a converter valve according to some specific embodiments of the present application;

FIG. 8 is a schematic diagram illustrating the logical principle of a voltage command generation module during active/reactive power output control according to some embodiments of the present application;

FIG. 9 is a schematic diagram of an alternating-current direct-connected energy storage valve according to some embodiments of the present application;

FIG. 10 is a schematic flowchart of a control method of power generation unit system according to some embodiments of the present application;

FIG. 11 is a schematic flowchart of controlling an operating state of a new energy station and an energy storage power station based on a grid frequency measurement value according to some embodiments of the present application;

FIG. 12 is a schematic flowchart of controlling an operating state of a new energy station and an energy storage power station based on a grid frequency variation according to some embodiments of the present application;

FIG. 13 is a schematic flowchart of a control method of power generation unit system according to some specific embodiments of the present application;

FIG. 14 is a structural block diagram of a control apparatus of power generation unit system according to some embodiments of the present application; and

FIG. 15 is an internal structural diagram of an electronic device according to some embodiments of the present application.

Reference signs:

10. power generation unit system; 100. new energy station; 200. energy storage power station; 300. voltage coupling device; 301. first side; 302. second side; 303. third side; 201. energy storage valve; 202. converter valve; 212. voltage command generation module; 222. overcurrent suppression module; 232. voltage command control module; 2121. virtual synchronous generator module; 2122. comparison analysis module; and 2123. command generation module.

## DETAILED DESCRIPTION

To make the objectives, technical solutions, and advantages of the present application clearer, the present application is further described in detail below with reference to the accompanying drawings and embodiments. It should be understood that the specific embodiments described herein are merely for explaining the present application and are not intended to limit the present application.

The embodiments of the technical solutions of the present application will be described in detail below with reference to the accompanying drawings. The following embodiments are only used to illustrate the technical solutions of the present application more clearly and are merely examples, not intended to limit the scope of protection of the present application.

Unless otherwise defined, all technical and scientific terms used herein have the same meanings as commonly understood by those skilled in the technical field of the present application. The terms used herein are for the purpose of describing specific embodiments only and are not intended to limit the present application. The terms "include" and "have" and any variations thereof in the specification, claims, and the above description of the accompanying drawings of the present application are intended to cover non-exclusive inclusion.

In the description of the embodiments of the present application, technical terms such as "first" and "second" are used only to distinguish different objects and should not be understood as indicating or implying relative importance or implicitly indicating the number, specific order, or priority of the indicated technical features. In the description of the embodiments of the present application, "a plurality of" means two or more unless otherwise explicitly and specifically defined.

Reference to "embodiment" herein means that a specific feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of the present application, the term "and/or" is merely a description of the association relationship of associated objects, indicating that three relationships may exist. For example, A and/or B may indicate: A exists alone, A and B exist simultaneously, and B exists alone. Additionally, the character "/" herein generally indicates that the associated objects before and after are in an "or" relationship.

In the description of the embodiments of the present application, the term "multiple" refers to two or more (including two). Similarly, "a plurality of groups" refers to two or more groups (including two groups), and "a plurality of pieces" refers to two or more pieces (including two pieces).

In the description of the embodiments of the present application, unless otherwise explicitly specified and defined, technical terms such as "connection" should be understood in a broad sense. For example, it may be a mechanical connection or an electrical connection; it may be a direct connection or an indirect connection through an intermediate medium; it may be an internal connection between two components or an interaction relationship between two components. For those of ordinary skill in the art, the specific meanings of the above terms in the embodiments of the present application can be understood based on specific circumstances.

Currently, developing new energy sources represented by wind power and photovoltaic power has become an important goal for building a new power system. However, wind power and photovoltaic power are susceptible to weather influences, exhibiting randomness and intermittency. With the rapid growth of installed capacity of new energy, the integration capacity of the power system itself is insufficient, leading to frequent phenomena such as "wind curtailment" (abandoning wind power) and "solar curtailment" (abandoning solar power). Moreover, with the increasing proportion of new energy connected via power electronics, the new power system exhibits a weak grid form with low inertia and low short-circuit ratio. This requires new energy to actively support the power system to maintain system stability and enhance new energy integration.

Energy storage, as a flexible regulation tool, can achieve on-demand energy shifting over time and is an important technology and core equipment for adapting to the new energy system. For the current new energy transmission system, how to achieve the transmission of new energy, upgrade new energy to high-quality power sources, and achieve decarbonization and carbon reduction in the energy internet are issues that urgently need to be explored at present.

Through research, it has been found that a new energy station can be combined with an energy storage power station and integrated with a voltage coupling device to collectively form a power generation unit, which can externally present as a power generation unit, also referred to as a power generation unit system. Since the power generation unit includes a new energy station, a new energy power generation unit for new energy generation is realized. Without considering the carbon emissions during the operation of the equipment itself, there is usually no additional carbon emission during the new energy generation process, thereby achieving a low-carbon power generation unit. This low-carbon power generation unit can be connected to the grid and receive grid scheduling to improve the integration capacity of the grid for new energy. It should be understood that although carbon emissions may occur during the operation of the equipment itself, the carbon emissions during operation are much smaller compared to the carbon emissions during the power generation process (for example, carbon emissions in thermal power generation), and the two are not on the same order of magnitude. Therefore, this power generation unit can be considered a zero-carbon level power generation unit, and in the following embodiments, this power generation unit is also referred to as a zero-carbon power generation unit.

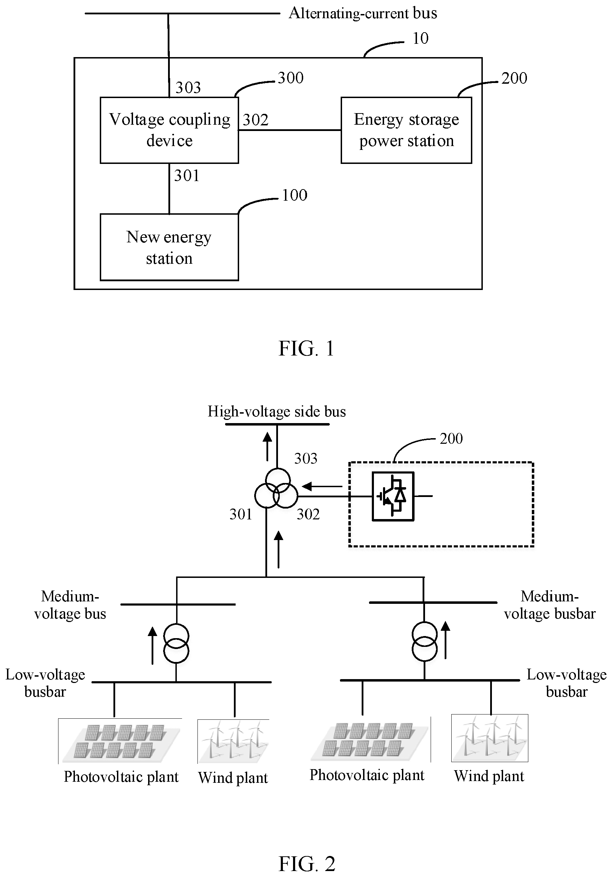

Referring to FIG. 1, an embodiment of the present application provides a power generation unit system, where the power generation unit system 10 includes a new energy station 100, an energy storage power station 200, and a voltage coupling device 300; where

the new energy station 100 is connected to a first side 301 of the voltage coupling device 300, the energy storage power station 200 is connected to a second side 302 of the voltage coupling device 300, and a third side 303 of the voltage coupling device 300 is connected to an alternating-current bus.
the new energy station 100 is configured to convert new energy into electric energy and output the electric energy;
the energy storage power station 200 is configured to store electric energy and output the electric energy externally when enabled; and
the voltage coupling device 300 is configured to store at least a portion of the electric energy output by the new energy station 100 in the energy storage power station 200, and is configured to transmit at least a portion of the electric energy output by the new energy station 100 and/or the electric energy output by the energy storage power station 200 when enabled to the alternating-current bus.

The new energy station 100 is a facility for converting new energy such as wind energy and solar energy into electric energy. A typical new energy station is equipped with new energy units, where the new energy units may include one or both of wind turbine units and photovoltaic arrays, which may be determined based on the construction needs of the new energy station. For example, in areas with strong winds but insufficient sunlight, only wind turbine units may be equipped; in areas with weak winds but abundant sunlight, only photovoltaic arrays may be equipped; in areas with sufficient wind and sunlight, both wind turbine units and photovoltaic arrays may be equipped at the new energy station. Since wind and sunlight are generally present in any area to some extent, all new energy stations may be equipped with both wind turbine units and photovoltaic arrays. The specific ratio of wind turbine units to photovoltaic arrays can be determined based on the wind resources and sunlight duration in the area where the new energy station is located. The embodiments of the present application do not limit the type of new energy units configured in the new energy station.

The energy storage power station 200 is a facility for storing electric energy, and can store electric energy and output the stored electric energy when needed to provide electric energy externally.

The voltage coupling device 300 is a device capable of achieving voltage coupling, and can transfer voltage from one side of the voltage coupling device to another side, realizing voltage transmission. During the transmission process, the voltage level may not be adjusted, or the voltage level may be adjusted simultaneously, such as stepping down or stepping up the transmitted voltage. It has high isolation and high safety. The new energy station and the energy storage power station are coupled via the voltage coupling device to achieve short-distance power and signal transmission between stations. By arranging the control device of the power generation unit system at a location close to the voltage coupling device, energy can be uniformly allocated, reducing delays caused by remote communication, achieving a fast response speed. This enables fast response to grid demands, allows for unified energy management of the new energy station and the energy storage power station in the voltage coupling device area, and reduces wind and solar curtailment and energy loss.

Based on the power generation unit system of this embodiment of the present application, the new energy station 100 is connected to the first side 301 of the voltage coupling device 300, the energy storage power station 200 is connected to the second side 302 of the voltage coupling device 300, and the third side 303 of the voltage coupling device 300 is connected to the alternating-current bus. The voltage coupling device can store at least a portion of the electric energy output by the new energy station in the energy storage power station, and can transmit at least a portion of the electric energy output by the new energy station and/or the electric energy output by the energy storage power station when enabled to the alternating-current bus. In this way, the new energy station, the energy storage power station, and the voltage coupling device can be coupled to collectively form a power generation unit, externally presenting as a power generation unit. Since the power generation unit includes a new energy station, a new energy power generation unit for new energy generation is realized. Without considering the carbon emissions during the operation of the equipment itself, there is usually no additional carbon emission during the new energy generation process, thereby achieving a zero-carbon level power generation unit. It has a simple topology form, strong versatility, and high applicability, which is conducive to realizing intelligent expansion.

In a specific scenario, the electric energy provided by the power generation unit system 10 to the alternating-current bus may be provided solely by the new energy station 100. The surplus electric energy generated by the new energy station 100 can be stored in the energy storage power station 200, so that when needed, the energy storage power station 200 and the new energy station 100 can jointly provide electric energy to the alternating-current bus. Alternatively, the electric energy may be provided solely by the energy storage power station 200. Alternatively, under a condition that the stored electric energy in the energy storage power station 200 is insufficient, the electric energy output by the new energy station 100 may be transmitted to the alternating-current bus. These scenarios are exemplified below.

In some embodiments, the voltage coupling device couples the new energy electric energy from the new energy station received on the first side and/or the electric energy provided by the energy storage power station received on the second side, and transmits the coupled energy to the alternating-current bus through the third side.

Referring to FIG. 1, when electric energy needs to be provided, the new energy station 100 generates and outputs new energy electric energy, where the new energy electric energy is also referred to as first electric energy in the related embodiments of the present application. This new energy electric energy is transmitted to the first side 301 of the voltage coupling device 300, and the voltage coupling device 300 couples this new energy electric energy and transmits the coupled energy to the alternating-current bus through the third side 303 to provide electric energy to the grid. Alternatively, when electric energy needs to be provided, the stored electric energy can be provided by the energy storage power station 200 to the second side 302 of the voltage coupling device 300, and the voltage coupling device 300 couples the stored energy and transmits the coupled energy to the alternating-current bus through the third side 303 to provide electric energy to the grid. The electric energy output by the energy storage power station 200 is also referred to as second electric energy in the related embodiments of the present application. In some embodiments, the voltage coupling device 300 may also couple the new energy electric energy provided by the new energy station 100 with the electric energy provided by the energy storage power station and transmit the coupled energy to the alternating-current bus through the third side 303 to provide electric energy to the grid.

Thus, the new energy electric energy generated by the new energy station and the electric energy provided by the energy storage power station can both be supplied to the voltage coupling device. The voltage coupling device can couple the new energy electric energy and the electric energy from the energy storage power station and transmit the coupled energy to the alternating-current bus, thereby enabling external power supply.

In some embodiments, the voltage coupling device also couples the new energy electric energy from the new energy station received on the first side and stores it in the energy storage power station.

Referring to FIG. 1, the new energy station 100 generates new energy electric energy, which is transmitted to the first side 301 of the voltage coupling device 300. The voltage coupling device 300 couples this new energy electric energy and stores it in the energy storage power station 200 through the second side 302.

Thus, the new energy electric energy generated by the new energy station can also be coupled by the voltage coupling device for storage in the energy storage power station, thereby enabling the storage of the new energy electric energy generated by the new energy station, supplementing the electric energy stored in the energy storage power station, and improving the power supply capacity of the power generation unit system.

In some embodiments, the new energy station has an output terminal configured to output first electric energy;

the energy storage power station has a charge-discharge interface configured to receive and store surplus electric energy from the new energy station; and

the voltage coupling device is connected between the output terminal of the new energy station and the charge-discharge interface of the energy storage power station. The voltage coupling device is configured to, when the first electric energy is greater than target electric energy, output the target electric energy from the first electric energy to the alternating-current bus and store a portion of the first electric energy excluding the target electric energy as the surplus electric energy; when the first electric energy is equal to the target electric energy, output the target electric energy from the first electric energy to the alternating-current bus; and when the first electric energy is less than the target electric energy, enable the energy storage power station to output second electric energy, generate the target electric energy based on the first electric energy and the second electric energy, and output the target electric energy to the alternating-current bus.

The target electric energy refers to the electric energy that the power generation unit system as a whole needs to provide externally, and the specific amount of electric energy can be determined based on scheduling demands.

Based on this embodiment, when the first electric energy provided by the new energy station is equal to the target electric energy, the target electric energy from the first electric energy, that is, the first electric energy, can be directly output to the alternating-current bus to meet the power supply demand of the target electric energy. When the first electric energy is greater than the target electric energy, while outputting the target electric energy from the first electric energy to the alternating-current bus to meet the power supply demand of the target electric energy, a portion of the first electric energy excluding the target electric energy is stored as the surplus electric energy to achieve storage of excess electric energy. When the first electric energy is less than the target electric energy, the energy storage power station is enabled to output the second electric energy to generate the target electric energy based on the first electric energy and the second electric energy and output the target electric energy to the alternating-current bus to meet the power supply demand of the target electric energy.

In some embodiments, the new energy station has an output terminal configured to output first electric energy;

the energy storage power station has a charge-discharge interface configured to receive and store electric energy output from the new energy station; the voltage coupling device is connected between the output terminal of the new energy station and the charge-discharge interface of the energy storage power station; and

the voltage coupling device is configured to, when an SOC of the energy storage power station is greater than or equal to a preset SOC, enable the energy storage power station to output second electric energy, generate target electric energy based on the second electric energy, and output the target electric energy to the alternating-current bus; and when the SOC of the energy storage power station is less than the preset SOC, boost the target electric energy from the first electric energy and output it to the alternating-current bus.

Based on this embodiment, when the SOC of the energy storage power station is greater than or equal to the preset SOC, that is, when the electric energy stored in the energy storage power station is sufficient, the energy storage power station outputs the second electric energy to generate the target electric energy based on the second electric energy to meet the power supply demand of the target electric energy. Power supply through the energy storage power station can enhance the stability of power supply. When the SOC of the energy storage power station is less than the preset SOC, that is, when the electric energy stored in the energy storage power station is insufficient, the target electric energy from the first electric energy output by the new energy station is boosted and output to the alternating-current bus to meet the power supply demand of the target electric energy.

In some embodiments, the voltage coupling device is further configured to, when the SOC of the energy storage power station is less than the preset SOC and the first electric energy is greater than the target electric energy, store a portion of the first electric energy excluding the target electric energy in the energy storage power station.

Based on this embodiment, when the electric energy stored in the energy storage power station is insufficient, if the output of the new energy station is greater than the target electric energy, a portion of the first electric energy excluding the target electric energy can be further stored in the energy storage power station, thereby enabling the storage of surplus electric energy.

In some embodiments, the system further includes a detection device and a control device; where

the detection device is configured to detect a station state of the new energy station and an energy storage state of the energy storage power station; and the control device is configured to receive a scheduling instruction, and based on the scheduling instruction and the station state and the energy storage state detected by the detection module, control operating states of the new energy station, the energy storage device, and the power coupling device.

Based on this embodiment, the detection device can detect the station state of the new energy station and the energy storage state of the energy storage power station. When the power generation unit system needs to participate in scheduling, the control device, based on the received scheduling instruction and the station state and energy storage state detected by the detection module, controls the operating state of the new energy station, the energy storage device, and the power coupling device, thereby meeting the demands of power scheduling.

The control method of the control device for the operating state of the new energy station, the detection device, and the power coupling device is not limited.

Taking the control of the new energy station as an example, the control device can determine, based on the scheduling instruction, whether the new energy station needs to participate in frequency regulation (for example, whether it needs to enter a state of converting new energy into electric energy) and the operating mode during frequency regulation (for example, whether it is in an MTTP operating mode or a load reduction operating mode), so as to determine a control instruction to be sent to the new energy station. The new energy station, based on the control instruction, executes operations related to whether it needs to enter the state of converting new energy into electric energy and to the specific operating mode.

Taking the control of the energy storage power station as an example, the control device can determine, based on the scheduling instruction, whether the energy storage power station needs to participate in frequency regulation (for example, whether it needs to output electric energy externally) and the operating mode during frequency regulation (for example, whether it is in a charging state or a discharging state, and the charging mode in the charging state or the discharging mode in the discharging state), as well as the operating mode when not participating in frequency regulation (for example, whether charging is needed and the charging mode in the charging state), so as to determine a control instruction to be sent to the energy storage power station. The energy storage power station, based on the control instruction, executes a corresponding charging or discharging operation.

Taking the control device for the power coupling device as an example, the control device can determine, based on the scheduling instruction, whether the power coupling device needs to couple and transmit the electric energy output by the new energy station to the alternating-current bus, or needs to enable the energy storage power station to output electric energy and couple it before transmitting to the alternating-current bus, or needs to couple both the electric energy from the new energy station and the electric energy output by the energy storage power station and transmit them to the alternating-current target. It can also determine, among the electric energy output by the new energy station, the amount of electric energy coupled and transmitted to the alternating-current bus and the amount of electric energy coupled and stored in the energy storage power station, so as to determine a control instruction to be sent to the power coupling device. The power coupling device, based on the control instruction, executes a corresponding charging or discharging operation.

It should be understood that in the description of the various embodiments of the present application, the various processing processes or functions realized by the new energy station, the energy storage power station, and the power coupling device may all be completed under the control instruction of the control device, or may all be performed based on mutual communication among the control module of the new energy station, the control module of the energy storage power station, and the control module of the power coupling device to jointly determine a control decision. Taking the case where the various processing processes or functions are all completed under the control instruction of the control device as an example, the control device may be part of the new energy station, the energy storage power station, or the power coupling device, or may be disposed independently from the new energy station, the energy storage power station, and the power coupling device. Taking the case of being disposed independently from the new energy station, the energy storage power station, and the power coupling device as an example, the control device may be disposed at a position within a preset distance range from the power coupling device, or the position of the control device may be determined in combination with the positions of the new energy station, the energy storage power station, and the power coupling device, so as to reduce communication costs and improve communication efficiency.

In some embodiments, the voltage coupling device includes a three-winding transformer.

A three-winding transformer has three sides, with each side having a winding of a transformer, hence called a three-winding transformer. The voltage levels on each side are not limited. Typically, a three-winding transformer is a transformer having three voltage levels:

high voltage, medium voltage, and low voltage, with a transformer winding disposed on the high-voltage side, medium-voltage side, and low-voltage side, respectively. Based on actual technical needs, the voltage levels on each side can also be configured differently, such as high voltage, medium voltage, medium voltage; high voltage, low voltage, low voltage; or medium voltage, low voltage, low voltage. High voltage usually refers to a voltage level of electric energy transmitted on transmission lines, such as the voltage level at the sending end of an ultra-high voltage converter station. Medium voltage usually refers to a voltage level of intermediate transformation equipment (such as a substation and a transformer). Low voltage usually refers to a voltage level at which the distribution grid provides electric energy. Depending on the standards for grid configuration in different regions, the specific voltage ranges for high voltage, medium voltage, and low voltage may vary. For example, in some regions, the low voltage range is less than or equal to 6 kV, the medium voltage range is greater than 6 kV and less than or equal to 35 kV, and the high voltage range is greater than 35 kV.

The three-winding transformer operates based on Faraday's law of electromagnetic induction. When an alternating current passes through one winding, a magnetic field is generated in the iron core of the transformer. This magnetic field is conducted through the iron core to the other two windings, thereby inducing voltage in the other two windings, achieving voltage transmission. The transformation ratio of these windings can be determined by the turn ratio of the windings, where the transformation ratio equals the number of turns on the high-voltage side divided by the number of turns on the low-voltage side. According to the transformation ratio relationship, the high-voltage winding has more turns and generates a higher voltage, while the low-voltage winding has fewer turns and generates a lower voltage. The transformation ratio and the number of turns on each side of the three-winding transformer can be determined in combination with the level of electric energy that the new energy station can provide, the energy storage level of the energy storage power station, and the like, and are not specifically limited in the embodiments of the present application.

Thus, through the three-winding transformer, internal components such as the new energy station and the energy storage power station of the power generation unit system can be coupled via the three-winding transformer to collectively form a power generation unit, which externally presents as a zero-carbon power generation unit. This achieves a zero-carbon level power generation unit with a simple topology form and high applicability, and enables an intelligent, scalable, and easily implementable low-carbon pathway.

In some embodiments, the first side is a medium-voltage side or a low-voltage side, the second side is a medium-voltage side or a low-voltage side, and the third side is a high-voltage side.

Thus, for new energy stations and energy storage power stations of different voltage levels, a power generation unit can be realized to perform power generation. Moreover, the third side connected to the alternating-current bus is the high-voltage side, which can meet the power supply demands of high-voltage transmission lines.

In some embodiments, the first side is a high-voltage side, the second side is a high-voltage side, and the third side is a medium-voltage side.

Thus, medium-voltage level power supply can be provided accordingly, meeting the needs of small-capacity power scenarios.

In some embodiments, the new energy station includes a plurality of new energy stations, and output terminals of the plurality of new energy stations are all connected to the voltage coupling device.

Taking the first side as a medium-voltage side or a low-voltage side, the second side as a medium-voltage side or a low-voltage side, and the third side as a high-voltage side as an example, as shown in FIG. 2, the description is based on a scenario that includes two new energy stations, each equipped with wind turbine units (disposed in a wind farm) and photovoltaic modules. It should be understood that in specific implementations, the number of new energy stations and the numbers of wind turbine units and photovoltaic modules disposed in each new energy station can be determined based on actual technical needs, and are not specifically limited in the embodiments of the present application. By configuring different proportions of wind turbine units and photovoltaic modules according to needs and configuring the capacity of wind turbine units and photovoltaic modules based on actual technical scenarios, it can be applied to scenarios such as large-scale new energy base alternating-current/direct-current transmission systems, microgrid systems, offshore wind farm transmission, and regional grid interconnection, achieving a high proportion of new energy integration, ideally up to 100% new energy integration, and enabling an intelligent, scalable, and easily implementable low-carbon pathway.

In some embodiments, the power generation unit system further includes a busbar transformer, the busbar transformer being connected between the output terminal of the new energy station and the voltage coupling device.

Each new energy station can be connected to a busbar through the busbar transformer and then connected to the first side of the voltage coupling device through the busbar.

The type of the busbar transformer is not limited, as long as it is a transformer capable of converging the electric energy provided by a plurality of new energy stations to the bus.

Thus, under a condition that a plurality of new energy stations are configured, each new energy station is connected to the busbar through a busbar transformer and then connected to the first side of the voltage coupling device via the busbar, achieving the convergence of new energy electric energy from the plurality of new energy stations. By configuring the plurality of new energy stations, with each connected to the busbar through a busbar transformer, the number and capacity of new energy stations can be customized based on system requirements. This allows for different capacity configurations of new energy stations to meet the design needs of various power generation unit systems.

In some embodiments, a difference between a capacity of the energy storage power station and an actual output of the new energy station is within a preset range.

The capacity of the energy storage power station refers to the capacity of electric energy that the energy storage power station can store. The actual output of the new energy station refers to the electric energy that the new energy station can actually generate, usually expressed in terms of electrical power.

The difference between the capacity of the energy storage power station and the actual output of the new energy station being within the preset range indicates that the capacity of the energy storage power station matches the actual output of the new energy station, that is, the rated storage capacity of the energy storage power station matches the actual output of the new energy station. In a case of a match, the electrical power actually generated by the new energy station can be stored in the energy storage power station, and the energy storage power station either has no excess storage capacity or only a negligible amount of excess storage capacity if any.

The difference between the capacity of the energy storage power station and the actual output of the new energy station being within the preset range may indicate that the rated storage capacity of the energy storage power station is equal to the actual output of the new energy station, or the rated storage capacity of the energy storage power station is greater than the actual output of the new energy station but does not exceed a predetermined percentage of the actual output of the new energy station. This predetermined percentage can be set based on actual technical needs.

Taking the actual output of the new energy station as 600 MW (megawatts) as an example, if configured with a 20%-2 hour capacity, an energy storage power station with a capacity of 120 MW/240 MWh can be configured.

Thus, by configuring the capacity of the energy storage power station such that the difference from the actual output of the new energy station is within the preset range, the capacity of the energy storage power station matches the actual output of the new energy station, achieving a match between storage capacity and actual new energy output. This ensures that the electric energy generated by the new energy station can be stored in the energy storage power station, reducing situations where a large amount of electric energy generated by the new energy station cannot be stored, and avoiding excessive waste of capacity space in the energy storage power station. This can improve the integration capacity of new energy electric energy generated by the new energy station, achieving an intelligent and scalable low-carbon pathway.

In some embodiments, the actual output of the new energy station is determined based on a maximum capacity of the new energy station and a coincidence factor.

The maximum capacity of the new energy station is the absolute maximum output of the new energy station, and is the sum of the absolute maximum loads of the constituent units of the new energy station. The coincidence factor is a ratio of the comprehensive maximum load of the new energy station to the absolute maximum loads of the constituent units of the new energy station.

In some embodiments, the actual output of the new energy station may be the product of the maximum capacity of the new energy station and the coincidence factor.

Thus, by using the maximum capacity and coincidence factor of the new energy station, the actual output of the new energy station can be accurately determined. On this basis, the configuration of the energy storage power station can achieve a high degree of matching between the storage capacity of the energy storage power station and the actual new energy output.

In some embodiments, when the power generation unit system participates in primary frequency regulation, the energy storage power station controls an operating state of the energy storage power station based on a grid frequency variation.

Primary frequency regulation refers to an automatic control process in which, once the grid frequency deviates from a rated value, the active power of units in the grid is automatically adjusted to limit the grid frequency variation and maintain grid frequency stability. Whether the power generation unit system needs to participate in primary frequency regulation can be determined in various possible ways, for example, by receiving a scheduling instruction from the power system, where scheduling instruction specifies that the power generation unit system needs to participate in primary frequency regulation. For another example, the power scheduling system has preset times for each power generation unit to participate in primary frequency regulation, when the time for the power generation unit system to participate in primary frequency regulation arrives, it is determines that the power generation unit system needs to participate in primary frequency regulation. In other embodiments, whether the power generation unit system needs to participate in primary frequency regulation may be determined through other methods. For example, it may be determined based on the scheduling strategy of the power scheduling system. The embodiments of the present application do not limit thereto.

The grid frequency variation refers to the change in grid frequency, and may be a difference between the grid frequency value of the current scheduling cycle and the grid frequency value of the previous cycle.

Thus, when the power generation unit system needs to participate in primary frequency regulation, controlling the operating state of the energy storage power station in combination with the grid frequency variation can mitigate grid frequency fluctuations and enhance grid performance.

In some embodiments, when the power generation unit system participates in primary frequency regulation, the energy storage power station further sends a charge-discharge state signal to the new energy station; and

the new energy station further acquires the charge-discharge state signal of the energy storage power station and controls an operating state of the new energy station based on the charge-discharge state signal and the grid frequency variation.

The charge-discharge state signal is a signal sent by the energy storage power station based on a charge-discharge state (State of Charge, SOC) of the energy storage power station. The charge-discharge state, or state of charge, reflects the remaining capacity. Therefore, the charge-discharge state of the energy storage power station reflects the remaining capacity situation of the energy storage power station, such as whether the remaining storage capacity of the energy storage power station is sufficient.

The charge-discharge state signal sent by the energy storage power station to the new energy station is used to notify the new energy station of the charge-discharge state of the energy storage power station. The charge-discharge state signal may include the charge-discharge state or may be information further indicating the state based on the charge-discharge state. For example, a first value indicates that the SOC of the energy storage power station is greater than a maximum operating set value, meaning the storage space of the energy storage power station is relatively sufficient; a second value indicates that the SOC of the energy storage power station is less than a minimum operating set value, meaning the storage space of the energy storage power station is insufficient or the energy storage power station is relatively full. It should be understood that the charge-discharge state signal can also be generated in other ways, and the embodiments of the present application do not specifically limit thereto.

Thus, during the process of the power generation unit system participating in primary frequency regulation, by providing the charge-discharge state of the energy storage power station to the new energy station through the charge-discharge state signal, the charge-discharge state of the energy storage power station can be combined with the grid frequency variation to control the operating state of the new energy station. This enables coordination between the energy storage power station and the new energy station. Moreover, the operating state of the new energy station matches the charge-discharge state of the energy storage power station, which helps maintain the performance of the new energy station and can improve the integration capacity of new energy electric energy generated by the new energy station.

In some embodiments, the energy storage power station is further configured to, when the grid frequency variation is less than a first deadband value and the charge-discharge state indicates that the SOC of the energy storage power station is less than a minimum operating set value, if the new energy station is in a load reduction operating mode, control the energy storage power station to enter a charging mode; if the new energy station is not in the load reduction operating mode, control the energy storage power station to stop outputting power.

The deadband range of the grid represents a range within which the grid frequency can fluctuate. By setting the deadband range, frequency regulation control can be performed only when the frequency exceeds the deadband range, reducing the possibility of frequent frequency regulation control to maintain grid stability. The first deadband value refers to the minimum value of the deadband range, and the maximum value of the deadband range is referred to as the second deadband value in the embodiments of the present application.

The deadband range is usually set based on a set value combined with a fluctuation range. For example, it can generally be expressed as $M \pm a$, where $M-a$ is the first deadband value, $M+a$ is the second deadband value, and $M$ and $a$ are both positive numbers greater than 0. When the grid frequency variation is less than the first deadband value, it indicates that the grid frequency variation is significant, requiring frequency regulation control, and the grid frequency has decreased, requiring power increase. When the grid frequency variation is greater than the second deadband value, it indicates that the grid frequency variation is significant, requiring frequency regulation control, and the grid frequency has increased, requiring power reduction.

The load reduction operating mode refers to a mode in which the new energy station operates at a lower power, that is, the new energy station is not operating at full power. The specific method of load reduction is not limited. In the load reduction operating mode, the new energy station still has a margin for power increase, that is, the power of the new energy station can be further increased. When full load power supply is not required, the new energy station can operate in the load reduction operating mode, thereby extending the service life of the new energy station while meeting electric energy demands.

The minimum operating set value is the minimum state of charge that the energy storage power station needs to meet, and its specific value can be set based on actual technical needs, which is not specifically limited in the embodiments of the present application.

Controlling the energy storage power station to stop outputting power refers to controlling the energy storage power station to stop outputting electrical power, such as controlling the energy storage power station to stop outputting active power, or controlling the energy storage power station to stop charging and discharging operations. In other embodiments, other methods can also be used to control the energy storage power station to stop outputting electrical power.

Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is less than the minimum operating set value, it indicates that the storage space of the energy storage power station is still relatively sufficient. In this case, if the new energy station is in the load reduction operating mode, it indicates that the new energy station still has a margin for power increase. Therefore, by controlling the energy storage power station to enter the charging mode, the energy storage power station can be charged simultaneously. If the new energy station is not in the load reduction operating mode, it indicates that the power increase margin of the new energy station is small, so the energy storage power station is controlled to stop outputting power to maintain the energy storage performance of the energy storage power station.

In some embodiments, the energy storage power station is further configured to, when the grid frequency variation is less than a first deadband value and the charge-discharge state indicates that the SOC of the energy storage power station is normal or greater than a maximum operating set value, control the energy storage power station to perform an inertia and frequency regulation process for power output.

The maximum operating set value refers to the maximum state of charge set for the energy storage power station, and its specific value can be set based on actual technical needs. Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is normal or greater than the maximum operating set value, it indicates that the energy storage of the energy storage power station is relatively sufficient, so the energy storage power station performs the inertia and frequency regulation process for power output to meet power scheduling demands.

In some embodiments, the energy storage power station is further configured to, when the grid frequency variation is greater than a second deadband value and the charge-discharge state indicates that the SOC of the energy storage power station is normal or less than a minimum operating set value, control the energy storage power station to perform an inertia and frequency regulation process for power absorption.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the SOC of the energy storage power station is normal or less than the minimum operating set value, it indicates that the energy storage power station still has storage space, so the energy storage power station is controlled to perform the inertia and frequency regulation process for power absorption to meet power scheduling demands.

In some embodiments, the energy storage power station is further configured to, when the grid frequency variation is greater than a second deadband value and the charge-discharge state indicates that the SOC of the energy storage power station is greater than a maximum operating set value, control the energy storage power station to stop outputting power.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the SOC of the energy storage power station is greater than the maximum operating set value, it indicates that the energy storage of the energy storage power station is sufficient, so the new energy station is controlled to enter the load reduction operating mode to decrease the overall power of the power generation unit system.

In some embodiments, the new energy station is configured to, when the grid frequency variation is less than a first deadband value and the charge-discharge state indicates that the SOC of the energy storage power station is less than a minimum operating set value, if the new energy station is in a load reduction operating mode, increase a power of the new energy unit.

Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is less than the minimum operating set value, it indicates that the energy storage of the energy storage power station is not sufficient. Therefore, if the new energy station is in the load reduction operating mode, it indicates that the new energy station still has a margin for power increase, so by increasing the power of the new energy unit, the overall power of the power generation unit system is increased to meet system requirements.

In some embodiments, for the new energy station, when the grid frequency variation is less than a first deadband value and the charge-discharge state indicates that the SOC of the energy storage power station is less than a minimum operating set value, if the new energy station is not in a load reduction operating mode, the new energy station is controlled to be in a maximum power point tracking (Maximum Power Point Tracking, MPPT) mode.

The maximum power point tracking refers to a capability to detect the generation voltage in real time and track the highest voltage and current values, enabling the system to generate electric energy with the highest efficiency. The minimum operating set value refers to the minimum state of charge set for the energy storage power station, and its specific value can be set based on actual technical needs.

Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is less than the minimum operating set value, it indicates that the energy storage of the energy storage power station is not sufficient, and the new energy station is not in the load reduction operating mode, so the new energy station is controlled to be in the maximum power point tracking mode to capture new energy resources to the greatest extent, so as to increase the overall power of the power generation unit system.

In some embodiments, when the grid frequency variation is less than a first deadband value and the charge-discharge state indicates that the SOC of the energy storage power station is normal or greater than a maximum operating set value, the new energy station controls the new energy unit to be in a maximum power point tracking mode.

The maximum operating set value refers to the maximum state of charge set for the energy storage power station, and its specific value can be set based on actual technical needs. Thus, when the grid frequency variation is greater than a deadband range and less than the first deadband value, it indicates that the grid frequency variation is significant and the grid frequency has decreased, so the power generation unit system can respond. If the charge-discharge state indicates that the SOC of the energy storage power station is normal or greater than the maximum operating set value, it indicates that the energy storage of the energy storage power station is relatively sufficient, so the new energy station is controlled to be in the maximum power point tracking mode to capture new energy resources to the greatest extent, so as to increase the overall power of the power generation unit system.

In some embodiments, when the grid frequency variation is greater than a second deadband value and the charge-discharge state indicates that the SOC of the energy storage power station is normal or less than a minimum operating set value, the new energy station controls the new energy unit to be in a maximum power point tracking mode.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the SOC of the energy storage power station is normal or less than the minimum operating set value, it indicates that the energy storage power station still has storage space, so the new energy station is controlled to be in the maximum power point tracking mode to capture new energy resources to the greatest extent, so as to decrease the overall power of the power generation unit system.

In some embodiments, for the new energy station, when the grid frequency variation is greater than a second deadband value and the charge-discharge state indicates that the SOC of the energy storage power station is greater than a maximum operating set value, the new energy station is controlled to enter a load reduction operating mode.

Thus, when the grid frequency variation is greater than a deadband range and greater than the second deadband value, it indicates that the grid frequency variation is significant and the grid frequency has increased, so the power generation unit system can respond. If the charge-discharge state of the energy storage power station indicates that the SOC of the energy storage power station is greater than the maximum operating set value, it indicates that the energy storage of the energy storage power station is sufficient, so the new energy station is controlled to enter the load reduction operating mode to decrease the overall power of the power generation unit system.

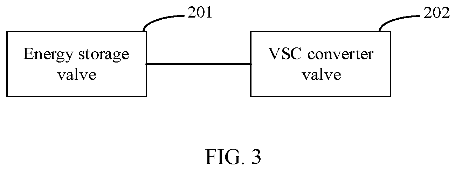

In some embodiments, referring to FIG. 3, the energy storage power station includes an energy storage valve 201 and a converter valve 202 that are connected. Thus, by configuring an energy storage power station including an energy storage valve and a converter valve, energy storage and power supply applications are achieved through the cooperation of the energy storage valve and the converter valve.

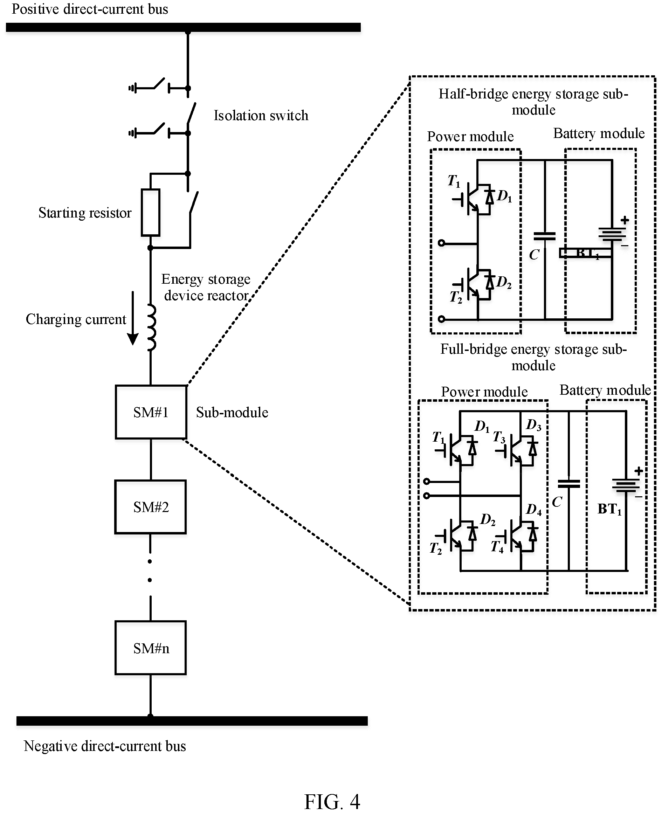

The energy storage valve refers to an energy storage apparatus that can achieve energy storage or power output through valve control. Referring to FIG. 4, in some embodiments, the energy storage valve 201 includes a plurality of energy storage sub-modules connected in series. These energy storage sub-modules may be half-bridge energy storage sub-modules or may be full-bridge energy storage sub-modules. Each energy storage sub-module includes a battery module and a power module that are connected. By controlling the switching state of the power module, the switching state of the battery module is controlled to complete constant direct-current voltage control or constant current control of the direct-current direct-connected energy storage valve. After the plurality of energy storage submodules are connected in series, one end is connected to a positive electrode direct-current bus through an energy storage apparatus reactor, a starting resistor, and an isolation switch, and the other end is connected to a negative electrode direct-current bus.

The converter valve, also known as a converter, can achieve rectification and inversion functions. Optionally, the converter valve can also achieve control of active/reactive power output and other functions. In some embodiments, the converter valve 202 may be a VSC (Voltage Source Converter, voltage source converter) valve, thereby enabling flexible four-quadrant operation through the VSC valve.

Under a condition that the energy storage power station includes an energy storage valve 201 and a converter valve 202, in some embodiments, the controlling the energy storage power station to stop outputting power can specifically be controlling the energy storage valve 201 of the energy storage power station to exit operation. In this way, by having the energy storage valve 201 exit operation, the energy storage power station stops outputting power, which can achieve accuracy in controlling the energy storage power station to stop outputting power.

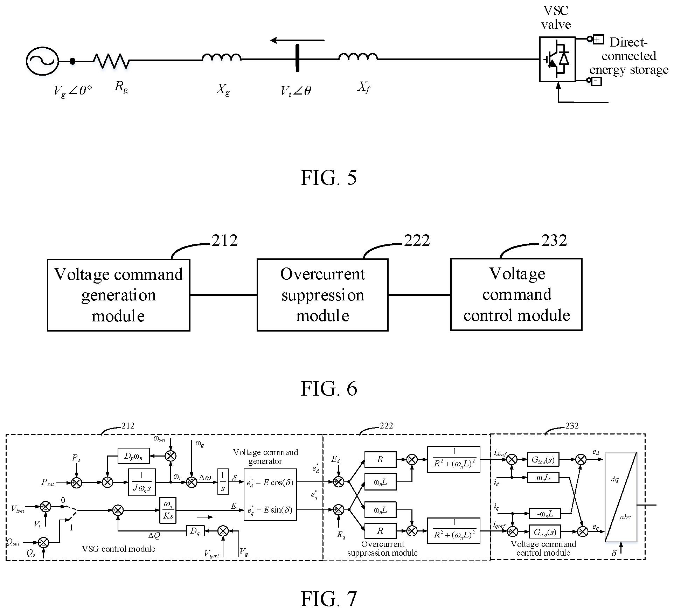

Taking the converter valve 202 as a VSC as an example, a schematic diagram illustrating the principle of a topology structure of the VSC valve 202 connected to the grid in the energy storage power station is shown in FIG. 5. As shown in FIG. 5, the VSC valve 202 is connected to the grid end, and a voltage of the grid end is $V_g$. During the connection process, there is an internal impedance $X_f$ inside the converter valve, so a voltage at the output end of the converter valve is expressed as $V_t$ with a phase angle of $\theta$. On the line connected to the grid end, there is a line reactance $X_g$ and a line resistance $R_g$. Due to the presence of the internal impedance $X_f$ of the converter valve, line reactance $X_g$, and line resistance $R_g$, there is a difference between the voltage $V_t$ at the output end of the converter valve and the voltage $V$ of the grid end.

The logic for the VSC valve 202 to achieve active/reactive power output control can be configured based on actual technical needs. In some embodiments, a schematic diagram illustrating the principle of active/reactive power output control by the VSC valve 202 is shown in FIG. 6. Referring to FIG. 6, after generating a voltage command, the VSC valve 202 performs overcurrent suppression processing on the voltage command to obtain a current command after overcurrent suppression, then generates a voltage control signal based on the current command, and executes a control action corresponding to the voltage control signal.

Referring to FIG. 6, logical processing modules for active/reactive power output control by the VSC valve 202 include a voltage command generation module 212, an overcurrent suppression module 222, and a voltage command control module 232 connected in sequence.

The voltage command generation module 212 is configured to generate a voltage command.

The overcurrent suppression module 222 is configured to perform overcurrent suppression processing on the voltage command to obtain a current command after overcurrent suppression.

The voltage command control module 223 is configured to generate a voltage control signal based on the current command and execute a control action corresponding to the voltage control signal.

The voltage command generated by the voltage command generation module 212 is a voltage command generated based on grid scheduling and grid state, and is a control command generated based on the grid state. However, control based on this command may result in overcurrent situations. Therefore, after the overcurrent suppression processing performed by the overcurrent suppression module 222, a current command is generated, and then a voltage control signal is generated based on the current command, thereby completing the corresponding control action.

Thus, after generating the voltage command, the VSC valve performs overcurrent suppression processing on the voltage command before executing the action corresponding to the voltage command after overcurrent suppression, thereby improving the safety of the power generation unit system.

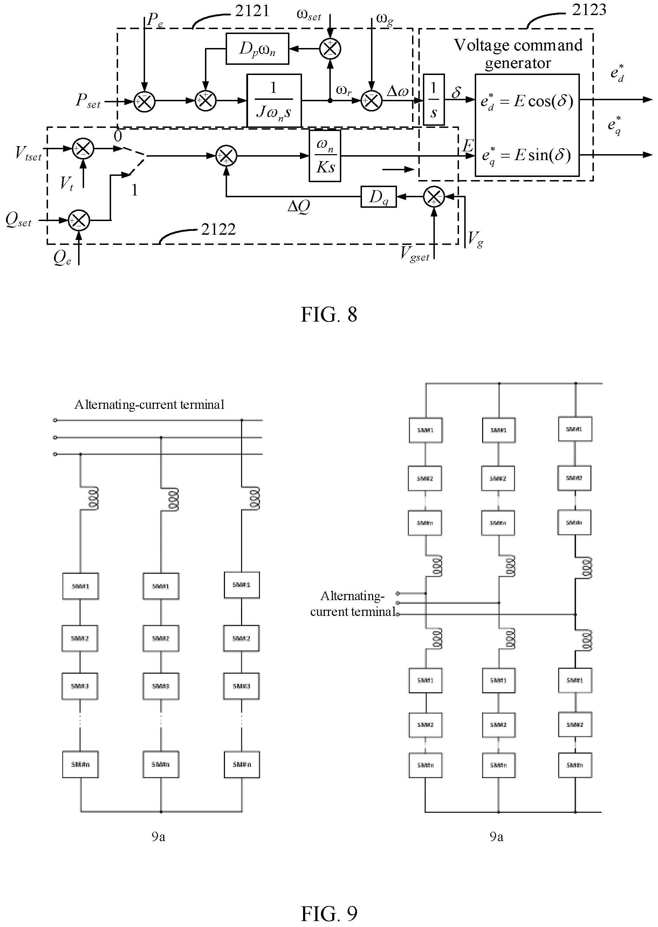

In some embodiments, referring to FIG. 7 and FIG. 8, the voltage command generation module 212 includes a virtual synchronous generator module 2121, a comparison analysis module 2122, and a command generation module 2123.

The virtual synchronous generator module 2121 is configured to acquire an active power measurement value and an actual grid voltage frequency value, and perform virtual synchronous processing based on the active power measurement value and the actual voltage frequency value to obtain a frequency difference.

The comparison analysis module 2122 is configured to acquire a reactive power measurement value, a PCC (point of common coupling) voltage measurement value, and an actual grid voltage amplitude value, and process them based on the reactive power measurement value, the PCC voltage measurement value, and the actual grid voltage amplitude value to obtain a voltage signal.

The command generation module 2123 is configured to generate a voltage command based on the frequency difference and the voltage signal.

The active power measurement value refers to an actual active power value obtained through measurement, the actual grid voltage frequency value refers to an actual grid voltage frequency value obtained through measurement, the reactive power measurement value refers to an actual reactive power value obtained through measurement, the PCC voltage measurement value refers to an actual PCC voltage value obtained through measurement, and the actual grid voltage amplitude value refers to an actual grid voltage amplitude value obtained through measurement.

It can be seen that the control mode of the VSC valve of the energy storage power station may be a flexible advanced VSC control mode, where active power control adopts grid-forming control based on a virtual synchronous generator (Virtual Synchronous Generator, VSG), equipped with functions such as inertia response and primary frequency regulation; and reactive power control consists of reactive power control and alternating-current voltage control modes.

Thus, by combining the processing of active power measurement values by the virtual synchronous generator and incorporating the acquisition of reactive power measurement values, PCC voltage measurement values, and actual grid voltage amplitude values, the generated voltage command can better match the actual grid fluctuation situation, improving grid performance.

Specifically, referring to FIG. 7 and FIG. 8, the comparison analysis module 2122 acquires a reactive power measurement value $Q_e$ and a reactive power reference value $Q_{set}$, and generates a reactive power control signal based on the reactive power measurement value $Q_e$ and the reactive power reference value $Q_{set}$; acquires a PCC voltage measurement value $V_t$ and a PCC voltage reference value $V_{tset}$, and generates a voltage control signal based on the PCC voltage measurement value $V_t$ and the PCC voltage reference value $V_{tset}$; acquires an actual grid voltage amplitude value $V_g$, and generates a voltage amplitude control signal based on the actual grid voltage amplitude value $V_g$ and a voltage amplitude reference value $V_{gset}$; and after selecting one of the reactive power control signal and the voltage control signal, performs summation processing on the voltage amplitude control signal, and performs signal conversion on the result of the summation processing to obtain a voltage signal.

As shown in FIG. 7 and FIG. 8, during signal conversion, a signal conversion coefficient may be $\omega_n/Ks$, where $\omega_n$ is a rated frequency value, $K$ is a reactive loop integration coefficient, and s is an integration operation coefficient. The obtained voltage signal may be an electric potential $q$ axis component $eq^*$.

In some embodiments, as shown in FIG. 7 and FIG. 8, during virtual synchronization, the virtual synchronous generator module 2121 acquires an active power measurement value $P_e$ and an active power reference value $P_{set}$, and generates an active power control signal based on the active power measurement value $P_e$ and the active power reference value $P_{set}$. After the active power control signal undergoes addition/subtraction operations with a feedback signal and multiplication with a coefficient $1/J\omega_n s$, a voltage amplitude calculation value $\omega_r$ is obtained. The voltage amplitude calculation value $\omega_r$

is operated with an actual voltage amplitude value $\omega_g$ to obtain a voltage amplitude difference $\Delta\omega$, and then integration operation is performed to obtain an electric potential d-axis component $ed^*$. Herein, $J$ is a virtual inertia constant, $\omega_n$ is a rated frequency value, and s is an integration operation coefficient.

Additionally, after the voltage amplitude calculation value $\omega_r$ is obtained, the voltage amplitude calculation value $\omega_r$ undergoes addition/subtraction operation with a grid frequency command value $\omega_{set}$, and the result is then multiplied by a coefficient $D_p\omega_n$ to obtain a feedback signal. Herein, $\omega_r$ is a damping coefficient.

Referring to FIG. 7, during overcurrent suppression, after an electric potential d-axis component $ed^*$ and an electric potential q-axis component $eq^*$ are obtained, the electric potential d-axis component $ed^*$ is compared with a d-axis component $E_d$ of a PCC measurement voltage to obtain a first comparison result. The first comparison result is multiplied by R and $\omega_n L$, respectively. The electric potential q-axis component $eq^*$ is compared with a q-axis component $E_q$ of the PCC measurement voltage to obtain a second comparison result. The second comparison result is multiplied by $\omega_n L$ and R, respectively.

After summing the product of the first comparison result and R with the product of the second comparison result and $\omega_n L$, suppression processing is performed with a suppression processing coefficient of $\frac{1}{R^2+(\omega_n L)^2}$ to obtain a reference value $i_{dref}$ for d-axis current. After subtracting the product of the first comparison result and $\omega_n L$ from the product of the second comparison result and R, suppression processing is performed with a suppression processing coefficient of $\frac{1}{R^2+(\omega_n L)^2}$ to obtain a reference value $i_{qref}$ for q-axis current. Thus, overcurrent suppression processing is achieved. Herein, R and L are the filter resistance and inductance on the alternating-current side of the VSC valve, respectively.

In some embodiments, as shown in FIG. 7, when generating a voltage command, a reference value $i_{dref}$ for d-axis current and a reference value $i_{qref}$ for q-axis current are obtained. The reference value $i_{dref}$ for d-axis current is subtracted from an actual value $i_d$ of a d-axis component of a PCC current, and the resulting difference is passed through a PI regulator and summed with the product of an actual value $i_q$ of a q-axis component of the PCC current and $-\omega_n L$ to obtain a d-axis component $e_d$ of an output electric potential of the converter. The reference value $i_{qref}$ for q-axis current is subtracted from an actual value $i_q$ of a q-axis component of the PCC current, and the resulting difference is passed through a PI regulator and summed with the product of an actual value $i_d$ of a d-axis component of the PCC current and $\omega_n L$ to obtain a q-axis component $e_q$ of the output electric potential of the converter. As shown in the figure, $G_{icd}(s)$ is a transfer function of a PI regulator for controlling an active component of grid current, and $G_{icq}(s)$ is a transfer function of a PI regulator for controlling a reactive component of grid current. During output, $\delta$ is a VSG output phase angle.

By adjusting a virtual inertia constant J and a damping coefficient $D_p$, virtual inertia support, damping control, and frequency regulation functions can be achieved. In reactive power control, by switching between alternating-current voltage control mode and reactive power control mode, voltage/reactive power support can be flexibly provided according to grid demands. Benefiting from the grid-forming energy storage power station, the designed zero-carbon super power generation unit also has black start and islanded operation functions.

In some embodiments, the energy storage power station includes an alternating-current direct-connected energy storage valve.

The alternating-current direct-connected energy storage valve can directly couple an alternating-current terminal to the voltage coupling device, reducing the need for a separate DC/AC converter, and performs charge-discharge control of energy storage sub-modules in an alternating-current direct-connected manner. High-voltage and large-capacity energy storage can be achieved through cascading of energy storage sub-modules.

An alternating-current direct-connected energy storage valve in some examples is shown in FIG. 9, where FIG. 9a and FIG. 9b are schematic diagrams of the alternating-current direct-connected energy storage valve under two different scenarios. As shown in FIG. 9, each phase (a, b, c phase) of the alternating-current direct-connected energy storage valve includes a plurality of cascaded energy storage sub-modules SM (SM#1, SM#1, ..., SM#n), enabling alternating-current/direct-current power conversion and energy storage.

Based on the power generation unit system described above, it can serve as a zero-carbon power generation unit to provide electric energy to the grid. The new energy electric energy generated by the new energy station 100 is provided to the voltage coupling device 300, and after coupling by the voltage coupling device 300, it is stored in the energy storage power station 200. When electric energy needs to be provided to the grid, the electric energy stored in the energy storage power station 200 can be provided to the voltage coupling device 300, and after coupling by the voltage coupling device 300, it is provided to the alternating-current bus. Under a condition that the energy storage in the energy storage power station 200 is insufficient, the new energy electric energy generated by the new energy station 100 can be provided to the voltage coupling device 300, and the voltage coupling device 300 couples the new energy electric energy transmitted by the new energy station 100 and provides the coupled energy to the alternating-current bus.

During the process of primary frequency regulation when required, if the energy storage in the energy storage power station 200 is sufficient, only the energy storage power station 200 may participate in the primary frequency regulation process, so as to reduce the possibility of electric energy loss due to the new energy station 100 participating in primary frequency regulation. If the energy storage in the energy storage power station 200 is insufficient, only the new energy station 100 may participate in primary frequency regulation to meet the grid frequency regulation demands and maintain grid stability. In this case, the energy storage power station 200 may also participate in frequency regulation or may not participate in frequency regulation, so as to maintain grid stability while preserving the performance of the energy storage power station 200.

Based on the implementation of the power generation unit system described above, it can provide functions such as active inertia response, frequency regulation, damping control, voltage/reactive power support, black start, smoothing new energy output fluctuations, islanded operation, and four-quadrant operation. The new energy storage power station adopts grid-forming control, which can provide active support to the system, enhance power system stability, and improve new energy integration levels.

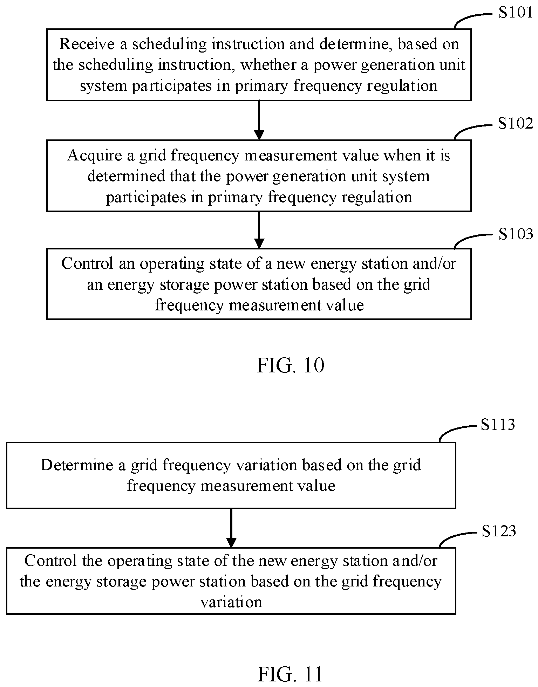

The present application further provides a control method of power generation unit system. The power generation unit system includes a new energy station and an energy storage power station, where the new energy station and the energy storage power station are connected to an alternating-current bus through a voltage coupling device. The control method of power generation unit system may be completed through interaction between the new energy station, the energy storage power station, and the voltage coupling device, or may be executed by the control device in the embodiments described above. Referring to FIG. 10, the control method of power generation unit system in some embodiments includes the following steps.

Step S101: Receive a scheduling instruction and determine, based on the scheduling instruction, whether the power generation unit system participates in primary frequency regulation.

Step S102: Acquire a grid frequency measurement value when it is determined that the power generation unit system participates in primary frequency regulation.

Step S103: Control an operating state of the new energy station and/or the energy storage power station based on the grid frequency measurement value.

Based on the control method of power generation unit system provided in the embodiments of the present application, the power generation unit system includes a new energy station and an energy storage power station, the new energy station and the energy storage power station being connected to an alternating-current bus through a voltage coupling device. In this way, internal components such as the new energy station and the energy storage power station of the power generation unit system can be coupled through the voltage coupling device to collectively form a power generation unit, externally presenting as a zero-carbon power generation unit. During the control process, the grid can schedule the power generation unit system, and after receiving the scheduling instruction, it determines based on the scheduling instruction whether the power generation unit system needs to participate in primary frequency regulation. When the power generation unit system needs to participate in primary frequency regulation, the operating state of the new energy station and/or the energy storage power station is controlled in combination with the grid frequency measurement value, thereby enabling grid scheduling, meeting the demands of grid scheduling, and achieving a scheduling process matching the grid state.

According to some embodiments of the present application, referring to FIG. 11, the above step S103 includes the following steps.

Step S113: Determine a grid frequency variation based on the grid frequency measurement value.

Step S123: Control an operating state of the new energy station and/or the energy storage power station based on the grid frequency variation.

Thus, after the grid frequency measurement value is obtained, the grid frequency variation is determined based on the grid frequency measurement value, and the operating state of the new energy station and/or the energy storage power station is controlled based on the grid frequency variation, thereby matching the variation in grid frequency and achieving a scheduling process matching the grid state.

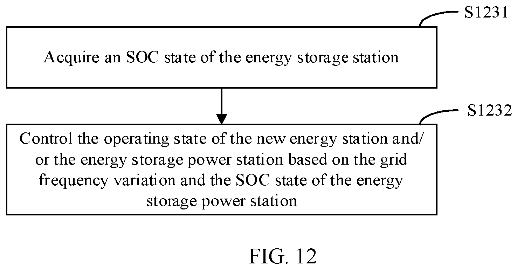

According to some embodiments of the present application, referring to FIG. 12, the controlling the operating state of the new energy station and/or the energy storage power station based on the grid frequency variation in step S123 includes the following steps.

Step S1231: Acquire an SOC state of the energy storage power station.

Step S1232: Control the operating state of the new energy station and/or the energy storage power station based on the grid frequency variation and the SOC state of the energy storage power station.

According to some embodiments of the present application, the controlling the operating state of the new energy station and/or the energy storage power station based on the grid frequency variation and the SOC state of the energy storage power station in step S1232 includes:

when the grid frequency variation is less than a first deadband value and the charge-discharge state indicates that the SOC of the energy storage power station is less than a minimum operating set value, if the new energy station is in a load reduction operating mode, increasing a power of the new energy station; if the new energy station is not in the load reduction operating mode, controlling the new energy station to be in a maximum power point tracking mode.

According to some embodiments of the present application, the controlling the operating state of the new energy station and/or the energy storage power station based on the grid frequency variation and the SOC state of the energy storage power station in step S1232 includes:

when the grid frequency variation is less than a first deadband value and the charge-discharge state of the energy storage power station indicates that the SOC of the energy storage power station is less than a minimum operating set value, if the new energy station is in a load reduction operating mode, controlling the energy storage power station to enter a charging mode; if the new energy station is not in the load reduction operating mode, controlling the energy storage power station to stop outputting power.

According to some embodiments of the present application, the controlling the operating state of the new energy station and/or the energy storage power station based on the grid frequency variation and the SOC state of the energy storage power station in step S1232 includes:

when the grid frequency variation is less than a first deadband value and the charge-discharge state indicates that the SOC of the energy storage power station is normal or greater than a maximum operating set value, controlling the new energy station to be in a maximum power point tracking mode.

According to some embodiments of the present application, the controlling the operating state of the new energy station and/or the energy storage power station based on the grid frequency variation and the SOC state of the energy storage power station in step S1232 includes:

when the grid frequency variation is less than a first deadband value and the charge-discharge state indicates that the SOC of the energy storage power station is normal or greater than a maximum operating set value, controlling the energy storage power station to perform an inertia and frequency regulation process for power output.

According to some embodiments of the present application, the controlling the operating state of the new energy station and/or the energy storage power station based on the grid frequency variation and the SOC state of the energy storage power station in step S1232 includes:

when the grid frequency variation is greater than a second deadband value and the charge-discharge state indicates that the SOC of the energy storage power station is normal or less than a minimum operating set value, controlling the new energy station to be in a maximum power point tracking mode.

According to some embodiments of the present application, the controlling the operating state of the new energy station and/or the energy storage power station based on the grid frequency variation and the SOC state of the energy storage power station in step S1232 includes:

when the grid frequency variation is greater than a second deadband value and the charge-discharge state indicates that the SOC of the energy storage power station is normal or less than a minimum operating set value, controlling the energy storage power station to perform an inertia and frequency regulation process for power absorption.

According to some embodiments of the present application, the controlling the operating state of the new energy station and/or the energy storage power station based on the grid frequency variation and the SOC state of the energy storage power station in step S1232 includes:

when the grid frequency variation is greater than a second deadband value and the charge-discharge state indicates that the SOC of the energy storage power station is greater than a maximum operating set value, controlling the new energy station to enter a load reduction operating mode.

According to some embodiments of the present application, the controlling the operating state of the new energy station and/or the energy storage power station based on the grid frequency variation and the SOC state of the energy storage power station in step S1232 includes:

when the grid frequency variation is greater than a second deadband value and the charge-discharge state indicates that the SOC of the energy storage power station is greater than a maximum operating set value, controlling the energy storage power station to stop outputting power.

In some embodiments, the controlling the energy storage power station to stop outputting power includes:

controlling an energy storage valve of the energy storage power station to exit operation.

After the controlling an energy storage valve of the energy storage power station to exit operation, energy storage control can be further performed using a direct-current voltage control method and a constant reactive power/alternating-current voltage control method.

During the process of controlling the operating state of the energy storage power station based on the grid frequency variation and the SOC state of the energy storage power station, the energy storage power station can perform overcurrent suppression processing on a voltage command after generating the voltage command, obtain a current command after overcurrent suppression, generate a voltage control signal based on the current command, and execute a control action corresponding to the voltage control signal.

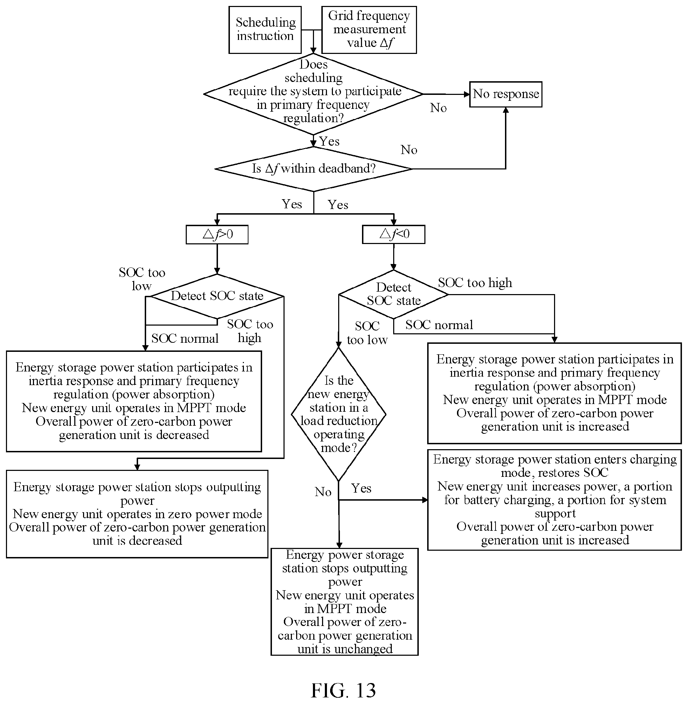

Referring to FIG. 13, in one embodiment, the control process of the power generation unit system may be as follows.

Acquire a scheduling instruction, where the scheduling instruction may be a scheduling instruction input by the system, and determine, based on the scheduling instruction, whether a zero-carbon super power generation unit participates in system primary frequency regulation.

If the zero-carbon super power generation unit does not need to participate in system primary frequency regulation, no response is made, that is, the zero-carbon super power generation unit does not respond to the system dynamic process.

If the zero-carbon super power generation unit needs to participate in system primary frequency regulation, acquire a grid frequency variation $\triangle f$. The grid frequency variation $\triangle f$ may be obtained simultaneously with the scheduling instruction or when it is determined that participation in system primary frequency regulation is required.

If the grid frequency variation $\triangle f$ is within a deadband range, that is, greater than the first deadband value and less than the second deadband value mentioned above, it indicates that the grid frequency variation is within an acceptable range, and no response is made, that is, the zero-carbon super power generation unit does not respond to the system dynamic process.

If the grid frequency variation $\triangle f$ is outside the deadband range, the zero-carbon power generation unit enters a response phase.

If the grid frequency variation $\triangle f$ is greater than 0, acquire the SOC of the energy storage power station:

If the SOC is normal or too low (for example, less than a minimum operating set value), control the energy storage power station to participate in inertia response and primary frequency regulation and absorb power from the system, while the new energy unit operates in MPPT mode, and the zero-carbon power generation unit as a whole exhibits a power reduction state.

If the SOC is too high (for example, greater than a maximum operating set value), the energy storage power station stops outputting power, the new energy unit operates in a load reduction operating mode, and overall power of the zero-carbon power generation unit is decreased.

If the grid frequency variation $\triangle f$ is less than 0, acquire the SOC of the energy storage power station.

If the SOC is normal or too high, the energy storage power station participates in inertia response and primary frequency regulation, sending power to the system, while the new energy unit operates in MPPT mode, and the zero-carbon power generation unit as a whole exhibits a power increase.

If the SOC is too low, determine whether the new energy unit is in a load reduction operating state or an MPPT operating mode:

If the new energy unit is in a load reduction operating state with a margin for power increase, the energy storage power station enters a charging mode to recover SOC, while the new energy unit increases power, with part used for battery charging and part for system support, and the zero-carbon power generation unit as a whole exhibits a power increase.

If the new energy unit is in an MPPT operating mode, the energy storage power station stops outputting power, the direct-current energy storage valve exits operation, and the VSC valve of the energy storage power station adopts direct-current voltage control and constant reactive power/alternating-current voltage control to function as an SVG (Static Var Generator, static reactive power compensation), while the new energy unit operates in MPPT mode, and the overall output power of the zero-carbon power generation unit remains unchanged.

Based on the method in the embodiment described above, the output of the energy storage power station and the new energy station can be regulated in stages based on the charge-discharge state of the energy storage power station. When the SOC is within a normal range, the energy storage power station provides grid-forming services such as inertia support and primary frequency regulation, while the new energy station operates in MPPT mode; when the SOC exceeds a set deadband, the new energy station is controlled to exit MPPT mode and switch to a load reduction operating mode; when the SOC is less than a minimum operating set value, the direct-current energy storage valve exits operation, and the new energy storage power station can realize functions such as SVG and STATACOM (reactive power compensation), achieving a coordinated control strategy for new energy and energy storage within the zero-carbon super power generation unit.

In some embodiments, in the control method of power generation unit system described above, under normal operation (most operating conditions), the new energy unit operates in MPPT mode, serving as the basic constant output part of the zero-carbon super power generation unit, while the overall zero-carbon super power generation unit can participate in dynamic processes such as system inertia response, primary frequency regulation, and voltage/reactive power support. Its active support capability is mainly realized by the new direct-current direct-connected energy storage power station. In the case of abnormal SOC, the new energy output is adjusted, or the operation of the direct-current energy storage valve of the energy storage power station is adjusted to protect the energy storage battery. The control method of power generation unit system reasonably balances system stability requirements and the economic operation needs of the zero-carbon power generation unit. Through SOC information of the energy storage power station, the output of the new energy unit and the energy storage power station is regulated in stages, ensuring maximum MPPT energy capture of new energy while meeting system active support demands and preventing excessive battery charge-discharge.

The related technical features in the embodiments of the control method of power generation unit system can be the same as those in the power generation unit system described above. Therefore, the specific limitations in one or more embodiments of the control method of power generation unit system provided above can refer to the limitations for the power generation unit system described earlier, and are not repeated herein.

It should be understood that although the steps in the flowcharts involved in the embodiments described above are shown sequentially as indicated by arrows, these steps are not necessarily executed in the order indicated by the arrows. Unless explicitly stated herein, there is no strict order restriction on the execution of these steps, and these steps can be executed in other orders. Moreover, at least a portion of the steps in the flowcharts involved in the embodiments described above may include multiple steps or multiple stages. These steps or stages are not necessarily executed at the same time but can be executed at different times. The execution order of these steps or stages is not necessarily sequential but can be executed alternately or in turn with other steps or at least some of the steps or stages in other steps.

Based on the same inventive concept, the embodiments of the present application further provide a control apparatus of power generation unit system to implement the control method of power generation unit system described above. The solution provided in the apparatus to solve the problem is similar to the solution described in the method above. Therefore, the specific limitations in one or more embodiments of the control apparatus of power generation unit system provided below can refer to the limitations for the control method of power generation unit system described earlier, and are not repeated herein.

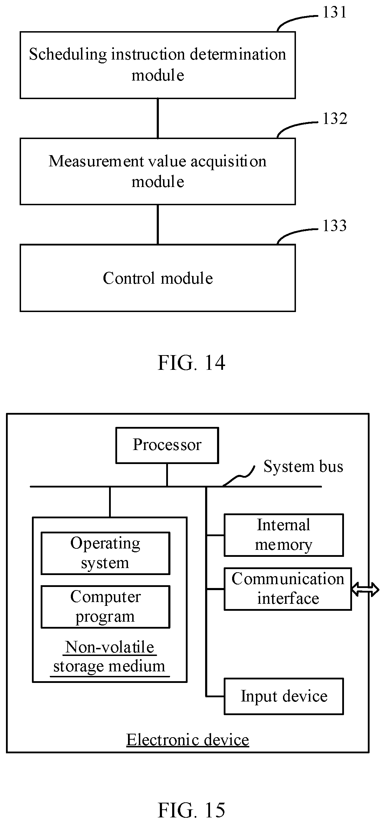

The present application further provides a control apparatus of power generation unit system, where the power generation unit system includes a new energy station and an energy storage power station, the new energy station and the energy storage power station being connected to an alternating-current bus through a voltage coupling device. The control apparatus of power generation unit system is arranged in the control device in the embodiments described above. Referring to FIG. 14, the control apparatus of power generation unit system in some embodiments includes:

a scheduling instruction determination module 131 configured to acquire a scheduling instruction and determine, based on the scheduling instruction, whether the power generation unit system participates in primary frequency regulation;
a measurement value acquisition module 132 configured to acquire a grid frequency measurement value when it is determined that the power generation unit system participates in primary frequency regulation; and
a control module 133 configured to control an operating state of the new energy station and/or the energy storage power station based on the grid frequency measurement value.

In some embodiments, the control module 133 is configured to determine a grid frequency variation based on the grid frequency measurement value and control an operating state of the new energy station and/or the energy storage power station based on the grid frequency variation.

In some embodiments, the control module 133 is configured to acquire an SOC state of the energy storage power station and control the operating state of the new energy station and/or the energy storage power station based on the grid frequency variation and the SOC state of the energy storage power station.

In some embodiments, the control module 133 is configured to, when the grid frequency variation is less than a first deadband value and the charge-discharge state indicates that the SOC of the energy storage power station is less than a minimum operating set value, if the new energy station is in a load reduction operating mode, increase a power of the new energy station; if the new energy station is not in the load reduction operating mode, control the new energy station to be in a maximum power point tracking mode.

In some embodiments, the control module 133 is configured to, when the grid frequency variation is less than a first deadband value and the charge-discharge state of the energy storage power station indicates that the SOC of the energy storage power station is less than a minimum operating set value, if the new energy station is in a load reduction operating mode, control the energy storage power station to enter a charging mode; if the new energy station is not in the load reduction operating mode, control the energy storage power station to stop outputting power.

In some embodiments, the control module 133 is configured to, when the grid frequency variation is less than a first deadband value and the charge-discharge state indicates that the SOC of the energy storage power station is normal or greater than a maximum operating set value, control the new energy station to be in a maximum power point tracking mode.

In some embodiments, the control module 133 is configured to, when the grid frequency variation is less than a first deadband value and the charge-discharge state indicates that the SOC of the energy storage power station is normal or greater than a maximum operating set value, control the energy storage power station to perform an inertia and frequency regulation process for power output.

In some embodiments, the control module 133 is configured to, when the grid frequency variation is greater than a second deadband value and the charge-discharge state indicates that the SOC of the energy storage power station is normal or less than a minimum operating set value, control the new energy station to be in a maximum power point tracking mode.

In some embodiments, the control module 133 is configured to, when the grid frequency variation is greater than a second deadband value and the charge-discharge state indicates that the SOC of the energy storage power station is normal or less than a minimum operating set value, control the energy storage power station to perform an inertia and frequency regulation process for power absorption.

In some embodiments, the control module 133 is configured to, when the grid frequency variation is greater than a second deadband value and the charge-discharge state indicates that the SOC of the energy storage power station is greater than a maximum operating set value, control the new energy station to enter a load reduction operating mode.

In some embodiments, the control module 133 is configured to, when the grid frequency variation is greater than a second deadband value and the charge-discharge state indicates that the SOC of the energy storage power station is greater than a maximum operating set value, control the energy storage power station to stop outputting power.

Each module in the control apparatus of power generation unit system described above can be implemented wholly or partially through software, hardware, or a combination thereof. Each of the above modules may be embedded in or independent of a processor in an electronic device in hardware form, or may be stored in a memory of an electronic device in software form, so that the processor can call and execute operations corresponding to each of the above modules.

In one embodiment, an electronic device is provided. The electronic device may be a terminal, and its internal structural diagram can be as shown in FIG. 15. The electronic device includes a processor, a memory, a communication interface, and an input device that are connected through a system bus. The processor of the electronic device is configured to provide computing and control capabilities. The memory of the electronic device includes a non-volatile storage medium and an internal memory. The non-volatile storage medium stores an operating system and a computer program. The internal memory provides an environment for the operation of the operating system and the computer program in the non-volatile storage medium. The communication interface of the electronic device is used for wired or wireless communication with external devices, for example, it can communicate with the new energy station 100 and/or the energy storage power station 200. Wireless communication can be achieved through WIFI, operator networks, NFC (near field communication), or other technologies. The computer program, when executed by the processor, implements a control method of power generation unit system. The input device of the electronic device may be a touch layer covering a display screen, or may be a button, a trackball, or a touchpad set on the casing of the electronic device, or may be an external keyboard, a touchpad, a mouse, or the like.

Those skilled in the art can understand that the structure shown in FIG. 15 is only a block diagram of a partial structure related to the solution of the present application and does not constitute a limitation on the electronic device to which the solution of the present application is applied. The specific electronic device may include more or fewer components than shown in the figure, or combine certain components, or have a different arrangement of components.

In one embodiment, an electronic device is provided and includes a memory and a processor, where the memory has a computer program stored, and the processor, when executing the computer program, implements the steps of the control method of power generation unit system in any one of the embodiments described above.

In one embodiment, a computer-readable storage medium is provided, having a computer program stored thereon, where the computer program, when executed by a processor, implements the steps of the control method of power generation unit system in any of the embodiments described above.

In one embodiment, a computer program product or computer program is provided. The computer program product or computer program includes computer instructions, where the computer instructions are stored in a computer-readable storage medium. A processor of a computer device reads the computer instructions from the computer-readable storage medium, and the processor executes the computer instructions, causing the computer device to execute the steps of the control method of power generation unit system in any one of the embodiments described above.

Those of ordinary skill in the art can understand that implementing all or part of the processes in the methods of the above embodiments can be completed by instructing related hardware through a computer program. The computer program can be stored in a non-volatile computer-readable storage medium, and when executed, the computer program can include the processes of the embodiments of the methods described above. Any reference to memory, storage, database, or other media used in the embodiments provided in the present application may include at least one of non-volatile and volatile memory. The non-volatile memory may include read-only memory (Read-Only Memory, ROM), magnetic tape, floppy disk, flash memory, optical memory, or the like. The volatile memory may include random access memory (Random Access Memory, RAM) or external cache memory. By way of illustration and not limitation, RAM can be in various forms, such as static random access memory (Static Random Access Memory, SRAM) or dynamic random access memory (Dynamic Random Access Memory, DRAM).

In conclusion, it should be noted that the above embodiments are only used to illustrate the technical solutions of the present application and not to limit them. Although the present application has been described in detail with reference to the foregoing embodiments, those of ordinary skill in the art should understand that modifications can still be made to the technical solutions described in the foregoing embodiments, or equivalent replacements can be made to some or all of the technical features therein. These modifications or replacements do not cause the essence of the corresponding technical solutions to depart from the scope of the technical solutions of the embodiments of the present application and should be covered within the scope of the claims and specification of the present application. In particular, as long as there is no structural conflict, the technical features mentioned in the various embodiments can be combined in any manner. The present application is not limited to the specific embodiments disclosed herein but includes all technical solutions falling within the scope of the claims.

**Claims**

1. A power generation unit system, wherein the power generation unit system comprises: a new energy station, an energy storage power station, and a voltage coupling device; wherein

the new energy station is connected to a first side of the voltage coupling device, the energy storage power station is connected to a second side of the voltage coupling device, and a third side of the voltage coupling device is connected to an alternating-current bus; the new energy station is configured to convert new energy into electric energy and output the electric energy; the energy storage power station is configured to store electric energy and output the electric energy externally when enabled; and the voltage coupling device is configured to store at least a portion of the electric energy output by the new energy station in the energy storage power station, and is configured to transmit at least a portion of the electric energy output by the new energy station and/or the electric energy output by the energy storage power station when enabled to the alternating-current bus.

2. The system according to claim 1, wherein

the new energy station has an output terminal configured to output first electric energy; the energy storage power station has a charge-discharge interface configured to receive and store surplus electric energy from the new energy station; and the voltage coupling device is connected between the output terminal of the new energy station and the charge-discharge interface of the energy storage power station, and the voltage coupling device is configured to, when the first electric energy is greater than target electric energy, output the target electric energy from the first electric energy to the alternating-current bus and store a portion of the first electric energy excluding the target electric energy as the surplus electric energy; when the first electric energy is equal to the target electric energy, output the target electric energy from the first electric energy to the alternating-current bus; and when the first electric energy is less than the target electric energy, enable the energy storage power station to output second electric energy, generate the target electric energy based on the first electric energy and the second electric energy, and output the target electric energy to the alternating-current bus.

3. The system according to claim 1, wherein

the new energy station has an output terminal configured to output first electric energy; the energy storage power station has a charge-discharge interface configured to receive and store electric energy output from the new energy station; the voltage coupling device is connected between the output terminal of the new energy station and the charge-discharge interface of the energy storage power station; and the voltage coupling device is configured to, when an SOC of the energy storage power station is greater than or equal to a preset SOC, enable the energy storage power station to output second electric energy, generate target electric energy based on the second electric energy, and output the target electric energy to the alternating-current bus; and when the SOC of the energy storage power station is less than the preset SOC, boost the target electric energy from the first electric energy and output the target electric energy to the alternating-current bus.

4. The system according to claim 3, wherein the voltage coupling device is further configured to, when the SOC of the energy storage power station is less than the preset SOC and the first electric energy is greater than the target electric energy, store a portion of the first electric energy excluding the target electric energy in the energy storage power station.

5. The system according to any one of claims 1 to 4, wherein the system further comprises a detection device and a control device; wherein

the detection device is configured to detect a station state of the new energy station and an energy storage state of the energy storage power station; and

the control device is configured to receive a scheduling instruction, and based on the scheduling instruction and the station state and the energy storage state detected by the detection module, control operating states of the new energy station, the energy storage device, and the power coupling device.

6. The power generation unit system according to any one of claims 1 to 5, wherein the voltage coupling device comprises a three-winding transformer.

7. The power generation unit system according to any one of claims 1 to 5, wherein the first side is a medium-voltage side or a low-voltage side, the second side is a medium-voltage side or a low-voltage side, and the third side is a high-voltage side.

8. The power generation unit system according to any one of claims 1 to 7, wherein the power generation unit system comprises a plurality of the new energy stations, and output terminals of the plurality of the new energy stations are all connected to the voltage coupling device.

9. The power generation unit system according to claim 8, wherein the power generation unit system further comprises a busbar transformer,

the busbar transformer being connected between the output terminal of the new energy station and the voltage coupling device.

10. The power generation unit system according to any one of claims 1 to 9, wherein a difference between a capacity of the energy storage power station and an actual output of the new energy station is within a preset range.

11. The power generation unit system according to any one of claims 1 to 10, wherein the energy storage power station comprises an energy storage valve and a converter valve that are connected.

12. The power generation unit system according to any one of claims 1 to 11, wherein the energy storage power station comprises an alternating-current direct-connected energy storage valve.

13. A control method of power generation unit system, wherein the power generation unit system comprises a new energy station and an energy storage power station, the new energy station and the energy storage power station being connected to an alternating-current bus through a voltage coupling device, and the method comprises:

receiving a scheduling instruction and determining, based on the scheduling instruction, whether the power generation unit system participates in primary frequency regulation;

acquiring a grid frequency measurement value when it is determined that the power generation unit system participates in primary frequency regulation; and

controlling an operating state of the new energy station and/or the energy storage power station based on the grid frequency measurement value.

14. The method according to claim 13, wherein the controlling an operating state of the new energy station and/or the energy storage power station based on the grid frequency measurement value comprises:

determining a grid frequency variation based on the grid frequency measurement value; and controlling the operating state of the new energy station and/or the energy storage power station based on the grid frequency variation.

15. The method according to claim 14, wherein the controlling the operating state of the new energy station and/or the energy storage power station based on the grid frequency variation comprises:

acquiring an SOC state of the energy storage power station; and

controlling the operating state of the new energy station and/or the energy storage power station based on the grid frequency variation and the SOC state of the energy storage power station.

16. The method according to claim 15, wherein the controlling the operating state of the new energy station and/or the energy storage power station based on the grid frequency variation and the SOC state of the energy storage power station comprises at least one of the following:

when the grid frequency variation is less than a first deadband value and the charge-discharge state indicates that the SOC of the energy storage power station is less than a minimum operating set value, if the new energy station is in a load reduction operating mode, increasing a power of the new energy station; if the new energy station is not in the load reduction operating mode, controlling the new energy station to be in a maximum power point tracking mode;

when the grid frequency variation is less than a first deadband value and the charge-discharge state of the energy storage power station indicates that the SOC of the energy storage power station is less than a minimum operating set value, if the new energy station is in a load reduction operating mode, controlling the energy storage power station to enter a charging mode; if the new energy station is not in the load reduction operating mode, controlling the energy storage power station to stop outputting power;

when the grid frequency variation is less than a first deadband value and the charge-discharge state indicates that the SOC of the energy storage power station is normal or greater than a maximum operating set value, controlling the new energy station to be in a maximum power point tracking mode;

when the grid frequency variation is less than a first deadband value and the charge-discharge state indicates that the SOC of the energy storage power station is normal or greater than a maximum operating set value, controlling the energy storage power station to perform an inertia and frequency regulation process for power output;

when the grid frequency variation is greater than a second deadband value and the charge-discharge state indicates that the SOC of the energy storage power station is normal or less than a minimum operating set value, controlling the new energy station to be in a maximum power point tracking mode;

when the grid frequency variation is greater than a second deadband value and the charge-discharge state indicates that the SOC of the energy storage power station is normal or less than a minimum operating set value, controlling the energy storage power station to perform an inertia and frequency regulation process for power absorption;

when the grid frequency variation is greater than a second deadband value and the charge-discharge state indicates that the SOC of the energy storage power station is greater than a maximum operating set value, controlling the new energy station to enter a load reduction operating mode; and

when the grid frequency variation is greater than a second deadband value and the charge-discharge state indicates that the SOC of the energy storage power station is greater than a maximum operating set value, controlling the energy storage power station to stop outputting power.

17. The method according to claim 16, wherein the controlling the energy storage power station to stop outputting power comprises:

controlling an energy storage valve of the energy storage power station to exit operation.

18. A control apparatus of power generation unit system, wherein the power generation unit system comprises a new energy station and an energy storage power station, the new energy station and the energy storage power station being connected to an alternating-current bus through a voltage coupling device, and the apparatus comprises:

a scheduling instruction determination module configured to acquire a scheduling instruction and determine, based on the scheduling instruction, whether the power generation unit system participates in primary frequency regulation;

a measurement value acquisition module configured to acquire a grid frequency measurement value when it is determined that the power generation unit system participates in primary frequency regulation; and

a control module configured to control an operating state of the new energy station and/or the energy storage power station based on the grid frequency measurement value.

19. The control apparatus according to claim 18, wherein the control module is configured to determine a grid frequency variation based on the grid frequency measurement value and control an operating state of the new energy station and/or the energy storage power station based on the grid frequency variation.

20. The control apparatus according to claim 19, wherein the control module is configured to acquire an SOC state of the energy storage power station and control the operating state of the new energy station and/or the energy storage power station based on the grid frequency variation and the SOC state of the energy storage power station.

21. The control apparatus according to claim 20, comprising at least one of the following:

the control module is configured to, when the grid frequency variation is less than a first deadband value and a charge-discharge state indicates that the SOC of the energy storage power station is less than a minimum operating set value, if the new energy station is in a load reduction operating mode, increase a power of the new energy station; if the new energy station is not in the load reduction operating mode, control the new energy station to be in a maximum power point tracking mode;

the control module is configured to, when the grid frequency variation is less than a first deadband value and a charge-discharge state of the energy storage power station indicates that the SOC of the energy storage power station is less than a minimum operating set value, if the new energy station is in a load reduction operating mode, control the energy storage power station to enter a charging mode; if the new energy station is not in the load reduction operating mode, control the energy storage power station to stop outputting power;

the control module is configured to, when the grid frequency variation is less than a first deadband value and a charge-discharge state indicates that the SOC of the energy storage power station is normal or greater than a maximum operating set value, control the new energy station to be in a maximum power point tracking mode;

the control module is configured to, when the grid frequency variation is less than a first deadband value and a charge-discharge state indicates that the SOC of the energy storage power station is normal or greater than a maximum operating set value, control the energy storage power station to perform an inertia and frequency regulation process for power output;

the control module is configured to, when the grid frequency variation is greater than a second deadband value and a charge-discharge state indicates that the SOC of the energy storage power station is normal or less than a minimum operating set value, control the new energy station to be in a maximum power point tracking mode;

the control module is configured to, when the grid frequency variation is greater than a second deadband value and a charge-discharge state indicates that the SOC of the energy storage power station is normal or less than a minimum operating set value, control the energy storage power station to perform an inertia and frequency regulation process for power absorption;

the control module is configured to, when the grid frequency variation is greater than a second deadband value and a charge-discharge state indicates that the SOC of the energy storage power station is greater than a maximum operating set value, control the new energy station to enter a load reduction operating mode; and

the control module is configured to, when the grid frequency variation is greater than a second deadband value and a charge-discharge state indicates that the SOC of the energy storage power station is greater than a maximum operating set value, control the energy storage power station to stop outputting power.

22. The control apparatus according to claim 21, wherein the control module controls an energy storage valve of the energy storage power station to exit operation to control the energy storage power station to stop outputting power.

23. An electronic device, comprising a memory and a processor, wherein the memory has a computer program stored, and the processor, when executing the computer program, implements the steps of the method according to any one of claims 13 to 16.

24. A computer-readable storage medium, having a computer program stored thereon, wherein the computer program, when executed by a processor, implements the steps of the method according to any one of claims 13 to 16.

25. A computer program product, comprising a computer program, wherein the computer program, when executed by a processor, implements the steps of the method according to any one of claims 13 to 16.

Alternating-current bus

```
┌──────────────────────────────────────────────────────┐ — 10
│                                                        │
│   303                — 300                      — 200  │
│  ┌──────────────┐                    ┌──────────────┐  │
│  │   Voltage    │ 302                │   Energy     │  │
│  │  coupling    │────────────────────│  storage     │  │
│  │   device     │                    │ power station│  │
│  └──────────────┘                    └──────────────┘  │
│   301                                                  │
│  ┌──────────────┐      — 100                           │
│  │  New energy  │                                       │
│  │   station    │                                       │
│  └──────────────┘                                       │
└──────────────────────────────────────────────────────┘
```

FIG. 1

High-voltage side bus

FIG. 2

```
┌──────────────────┐ ╭─ 201        ┌──────────────────┐ ╭─ 202
│  Energy storage  │              │   VSC converter  │
│      valve       │──────────────│       valve      │
└──────────────────┘              └──────────────────┘
```

FIG. 3

Positive direct-current bus

Isolation switch

Starting resistor

Charging current

Energy storage
device reactor

SM#1    Sub-module

SM#2

SM#n

Negative direct-current bus

Half-bridge energy storage sub-
module

Power module          Battery module

$T_1$

$D_1$

$C$

$T_2$

$D_2$

$BT_1$

+

−

Full-bridge energy storage sub-
module

Power module          Battery module

$T_1$   $D_1$  $T_3$   $D_3$

$C$

$BT_1$

+

−

$T_2$   $D_2$  $T_4$   $D_4$

FIG. 4

FIG. 5

FIG. 6

FIG. 7

FIG. 8

FIG. 9

S101

Receive a scheduling instruction and determine, based on the scheduling instruction, whether a power generation unit system participates in primary frequency regulation

S102

Acquire a grid frequency measurement value when it is determined that the power generation unit system participates in primary frequency regulation

S103

Control an operating state of a new energy station and/or an energy storage power station based on the grid frequency measurement value

FIG. 10

S113

Determine a grid frequency variation based on the grid frequency measurement value

S123

Control the operating state of the new energy station and/or the energy storage power station based on the grid frequency variation

FIG. 11

S1231

Acquire an SOC state of the energy storage station

S1232

Control the operating state of the new energy station and/ or the energy storage power station based on the grid frequency variation and the SOC state of the energy storage power station

FIG. 12

FIG. 13

131

Scheduling instruction determination module

132

Measurement value acquisition module

133

Control module

FIG. 14

Processor

System bus

Operating system

Internal memory

Computer program

Communication interface

Non-volatile storage medium

Input device

Electronic device

FIG. 15

## INTERNATIONAL SEARCH REPORT

| International application No. |
| --- |
| **PCT/CN2024/111267** |

### A. CLASSIFICATION OF SUBJECT MATTER

H02J 3/38(2006.01)i

According to International Patent Classification (IPC) or to both national classification and IPC

### B. FIELDS SEARCHED

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT: CNKI: VEN; DWPI; ENTXT: 新能源, 储能, 变压器, 调频, 死区, 太阳能, 电池, 充电, 放电; new energy, stored energy, transformer, frequency modulation, dead zone, solar energy, charge, discharge

### C. DOCUMENTS CONSIDERED TO BE RELEVANT

| Category* | Citation of document, with indication, where appropriate, of the relevant passages | Relevant to claim No. |
| --- | --- | --- |
| X | CN 105552963 A (SUZHOU GAOCHUANGTE NEW ENERGY SOURCES DEVELOPMENT CO., LTD.) 04 May 2016 (2016-05-04) description, paragraphs 15-21, and figures 1-2 | 1-12 |
| X | CN 109256786 A (STATE GRID QINGHAI ELECTRIC POWER COMPANY et al.) 22 January 2019 (2019-01-22) description, paragraphs 74-139, and figures 1-3 | 13-25 |
| A | CN 104410091 A (SHENZHEN SINOVO ELECTRIC TECHNOLOGIES CO., LTD.) 11 March 2015 (2015-03-11) entire document | 1-25 |
| A | EP 4002634 A1 (ELECTRICITE DE FRANCE) 25 May 2022 (2022-05-25) entire document | 1-25 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 October 2024** | **29 October 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/111267**

| Patent document cited in search report | | | Publication date (day/month/year) | Patent family member(s) | | | Publication date (day/month/year) |
|---|---|---|---|---|---|---|---|
| CN | 105552963 | A | 04 May 2016 | None | | | |
| CN | 109256786 | A | 22 January 2019 | CN | 109256786 | B | 11 August 2023 |
| CN | 104410091 | A | 11 March 2015 | CN | 104410091 | B | 18 January 2017 |
| EP | 4002634 | A1 | 25 May 2022 | FR | 3116393 | A1 | 20 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311016296